# EUROPEAN PATENT SPECIFICATION

(11) **EP 3 589 390 B1**
(45) Date of publication and mention of the grant of the patent: **17.08.2022**
(21) Application number: 18712746.9
(22) Date of filing: 01.03.2018
(51) Int. Cl.: B01D 67/00, B01D 69/12, B01D 71/02, B01D 71/56, B01D 69/14, B01D 69/10, B01D 61/02

(54) **SELECTIVELY PERMEABLE GRAPHENE OXIDE MEMBRANE**
SELEKTIV DURCHLÄSSIGE GRAPHENOXIDMEMBRAN
MEMBRANE D'OXYDE DE GRAPHÈNE SÉLECTIVEMENT PERMÉABLE

(30) Priority: 01.03.2017 US 201762465635 P
(43) Date of publication of application: 08.01.2020
(73) Proprietor: Nitto Denko Corporation, Ibaraki-shi, Osaka 567-8680 (JP)
(72) Inventor: ZHENG, Shijun, San Diego, CA 92129 (US); KITAHARA, Isamu, San Diego, CA 92130 (US); YAMASHIRO, Yuji, Ibaraki Osaka 567-8680 (JP); LIN, Weiping, Carlsbad, CA 92009 (US); ERICSON, John, La Palma, CA 90623 (US); SIDDIQUI, Ozair, Murrieta, CA 92563 (US); HSIEH, Wanyun, San Diego, CA 92126 (US); WANG, Peng, San Diego, CA 92126 (US); BARTELS, Craig, Roger, San Diego, CA 92127 (US); KOBUKE, Makoto, Ibaraki-shi Osaka 567-8680 (JP); NOUMI, Shunsuke, Kusatsu Shiga 525-032 (JP)
(74) Representative: Potter Clarkson
(86) International application number: PCT/US2018/020505
(87) International publication number: WO 2018/160871

(56) References cited:
- WO-A1-2014/168629
- WO-A1-2016/011124
- WO-A1-2017/106540
- WO-A1-2017/201482
- WO-A1-2018/067269
- US-A1- 2015 258 506
- US-A1- 2016 038 885
- US-A1- 2016 319 175
- XIA SHENGJI ET AL: "Ultrathin graphene oxide nanosheet membranes with variousd-spacing assembled using the pressure-assisted filtration method for removing natural organic matter", DESALINATION, ELSEVIER, AMSTERDAM, NL, vol. 371, 11 June 2015 (2015-06-11), pages 78-87, XP029179552, ISSN: 0011-9164, DOI: 10.1016/J.DESAL.2015.06.005
- WEI-SONG HUNG ET AL: "Cross-Linking with Diamine Monomers To Prepare Composite Graphene Oxide-Framework Membranes with Varying d-spacing", CHEMISTRY OF MATERIALS,, vol. 26, 14 April 2014 (2014-04-14), pages 2983-2990, XP002763259,
- ZHANG D D ET AL: "Inorganic-organic hybrid porous materials based on graphite oxide sheets", CARBON, ELSEVIER, OXFORD, GB, vol. 47, no. 13, 30 June 2009 (2009-06-30) , pages 2993-3000, XP026497538, ISSN: 0008-6223, DOI: 10.1016/J.CARBON.2009.06.052 [retrieved on 2009-06-30]
- LAI CHENG-LEE ET AL: "Bio-inspired cross-linking with borate for enhancing gas-barrier properties of poly(vinyl alcohol)/graphene oxide composite films", CARBON, ELSEVIER, OXFORD, GB, vol. 82, 8 November 2014 (2014-11-08), pages 513-522, XP029102466, ISSN: 0008-6223, DOI: 10.1016/J.CARBON.2014.11.003

## Description

### FIELD

The present embodiments are related to multi-layer polymeric membranes, including membranes comprising graphene materials for uses such as water treatment, desalination of saline water, or water removal.

### BACKGROUND

Due to the increase of human population and water consumption coupled with limited freshwater resources on earth, technologies such as seawater desalination and water treatment/recycle to provide safe and fresh water have become more important to our society. The desalination process using reverse osmosis (RO) membrane is the leading technology for producing fresh water from saline water. Most of current commercial RO membranes adopt a thin-film composite (TFC) configuration consisting of a thin aromatic polyamide selective layer on top of a microporous substrate; typically a polysulfone membrane on non-woven polyester. Although these RO membranes can provide excellent salt rejection rate, higher water flux; thinner and more hydrophilic membranes are still desired to further improve energy efficiency of the RO process. Therefore, new membrane materials and synthetic methods are in high demand to achieve the desired properties as described above. WEI-SONG HUNG ET AL: "Cross-Linking with Diamine Monomers To Prepare Composite Graphene Oxide-Framework Membranes with Varying d-spacing", CHEMISTRY OF MATERIALS,, vol. 26, 1 April 2014 (2014-04-01), pages 2983-2990, ZHANG D D ET AL: "Inorganic-organic hybrid porous materials based on graphite oxide sheets", CARBON, ELSEVIER, OXFORD, GB, vol. 47, no. 13, 1 November 2009 (2009-11-01), pages 2993-3000, WO 2016/011124 A1, WO 2014/168629 A1 and US 2015/258506 A1 all disclose cross-linked Graphene oxide membranes.

### SUMMARY

According to the present invention there is provided, a water permeable membrane according to claim 1, a method of removing solute from an unprocessed solution according to claim 9 and a method making a water soluble membrane according to claim 12.

This disclosure relates to a Graphene Oxide (GO) based multilayered membrane suitable for high water flux applications. Methods of efficiently and economically making these GO membrane compositions are also described. Water can be used as a solvent in preparing these GO membrane compositions, which makes the membrane preparation process more environmentally friendly and more cost effective.

In some embodiments, the membrane has a high water flux, and is capable of salt rejection.

Also described is a method of making a selectively permeable membrane, such as water permeable membrane, comprising: curing a coating mixture that has been applied to a substrate, wherein the curing is carried out at a temperature of 50 °C to 150 °C for 1 minute to 5 hours, wherein the coating mixture comprises an aqueous solution comprising an optionally substituted graphene oxide and a cross-linker that has been rested for 30 minutes to 12 hours to create a coating mixture.

Some embodiments include a method of removing solute from an unprocessed solution comprising exposing the unprocessed solution to a selectively permeable membrane, such as a water permeable membrane, described herein.

### BRIEF DESCRIPTION OF THE DRAWINGS

FIG. 1 is a depiction of a possible embodiment of a membrane.
FIG. 2 is a depiction of another possible embodiment of a membrane.
FIG. 3 is a depiction of another possible embodiment of a membrane.
FIG. 4 is a depiction of another possible embodiment of a membrane.
FIG. 5 is a depiction of another possible embodiment of a membrane.
FIG. 6 is a depiction of another possible embodiment of a membrane.
FIG. 7 is a depiction of another possible embodiment of a membrane.
FIG. 8 is a depiction of another possible embodiment of a membrane.
FIG. 9 is a depiction of a possible embodiment for the method of making a membrane.
FIG. 10 is a diagram depicting the experimental setup for the mechanical strength testing and water permeability and/or salt rejection testing.
FIG. 11 is a diagram depicting the experimental setup for the water vapor permeability and gas leakage testing.

### DETAILED DESCRIPTION

### General

A selectively permeable membrane includes a membrane that is relatively permeable for a particular fluid, such as a particular liquid or gas, but impermeable for other materials, including other fluids or solutes. For example, a membrane may be relatively permeable to water or water vapor and relatively impermeable ionic compounds or heavy metals. In some embodiments, the selectively permeable membrane can be permeable to water while being relatively impermeable to salts.

As used herein, the term "fluid communication" means that a fluid can pass through a first component and travel to and through a second component or more components regardless of whether they are in physical communication or the order of arrangement.

### Membrane

Water separation membranes where a highly hydrophilic composite material with low organic compound permeability and high mechanical and chemical stability may be useful to support a polyamide salt rejection layer in a RO membrane. This membrane material may be suitable for solute removal from an unprocessed fluid, such as desalination from saline water, purifying drinking water, or waste water treatment. Some selectively permeable membranes described herein are GO-based membranes having a high water flux, which may improve the energy efficiency of RO membranes and improve water recovery/separation efficiency. In some embodiments, the GO-based membrane can comprise one or more filtering layers, where at least one layer comprises a composite of a crosslinked graphene oxide (GO). It is believed that a crosslinked GO layer, with graphene oxide's potential hydrophilicity and selective permeability, may provide a membrane for broad applications where high water permeability with high selectivity of permeability is important. The GO-based membrane further comprises a filtering layer of crosslinked silica nanoparticles. It is believed that the additional layer of crosslinked silica nanoparticles may result in an increase in material strength. In addition, these selectively permeable membranes may also be prepared using water as a solvent, which can make the manufacturing process much more environmentally friendly and cost effective.

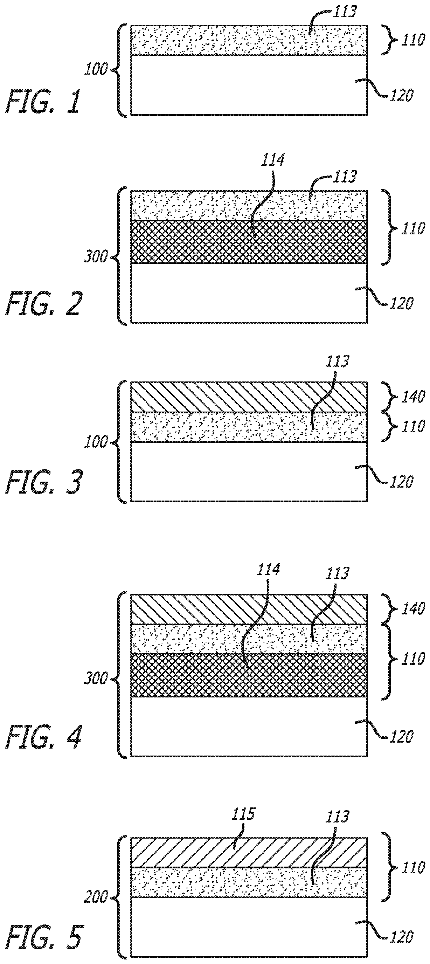

The water permeable membrane comprises a porous support and a filtering layer. The filtering layer may be in fluid communication with the support. For example, as depicted in FIG. 1, selectively permeable membrane **100** can include porous support **120.** A filtering layer **110** is disposed over porous support **120.** Filtering layer **110** can directly contact porous support **120**, or intervening layers may be disposed between filter layer **110** and porous support **120.**

A filtering layer may comprise, or consist of, a crosslinked graphene oxide layer, such as a crosslinked graphene oxide composite layer. For example, in FIG. 1, filtering layer **110** may be crosslinked graphene oxide layer **113.** A crosslinked graphene oxide layer may directly contact the porous support, meaning that the crosslinked graphene layer may be physically connected to the porous support by one or more intermediate layers, which may or may not be filtering layers.

The filtering layers may comprise a plurality of crosslinked GO layers.

A silica composite layer is present, which acts as an intermediate layer between the porous support and the crosslinked graphene oxide layer, e.g. a crosslinked graphene oxide composite layer. For example, in FIG. 2, selectively permeable membrane **300** comprises a silica composite layer **114,** which is disposed between porous support **120** and crosslinked graphene oxide layer **113.** Thus, filtering layer **110** comprises both crosslinked graphene oxide layer **113** and silica composite layer **114.**

In some embodiments, the filtering layers may comprise a plurality of silica nanoparticle layers.

Additional optional filtering layers may also be, such as a salt rejection layer, and etc. In addition, the membrane can also include a protective layer. In some embodiments, the protective layer can comprise a hydrophilic polymer. In some embodiments, the fluid, such as a liquid or gas, passing through the membrane travels through all the components regardless of whether they are in physical communication or their order of arrangement.

A protective layer may be placed in any position that helps to protect the selectively permeable membrane, such as a water permeable membrane, from harsh environments, such as compounds with may deteriorate the layers, radiation, such as ultraviolet radiation, extreme temperatures, etc. Some embodiments may have a configuration depicted in FIGS. 3-4. In FIG. 3, selectively permeable membrane **100**, represented in FIG. 1, may further comprise protective coating **140**, which is disposed on, or over, filter layer **110.** In FIG. 4, selectively permeable membrane, **300** represented in FIG. 2, may further comprise protective coating **140**, which is disposed on, or over, filter layer **110.**

In some embodiments, the resulting membrane can allow the passage of water and/or water vapor, but resists the passage of solute. For some membranes the solute restrained can comprise ionic compounds such as salts or heavy metals.

In some embodiments, the membrane can be used to remove water from a control volume. In some embodiments, a membrane may be disposed between a first fluid reservoir and a second fluid reservoir such that the reservoirs are in fluid communication through the membrane. In some embodiments, the first reservoir may contain a feed fluid upstream and/or at the membrane.

In some embodiments, the membrane selectively allows liquid water or water vapor to pass through while keeping solute, or liquid material from passing through. In some embodiments, the fluid upstream of the membrane can comprise a solution of water and solute. In some embodiments, the fluid downstream of the membrane may contain purified water or processed fluid. In some embodiments, as a result of the layers, the membrane may provide a durable desalination system that can be selectively permeable to water, and less permeable to salts. In some embodiments, as a result of the layers, the membrane may provide a durable reverse osmosis system that may effectively filter saline water, polluted water or feed fluids.

A selectively permeable membrane, such as a water permeable membrane, may further comprise a salt rejection layer to help prevent salts from passing through the membrane.

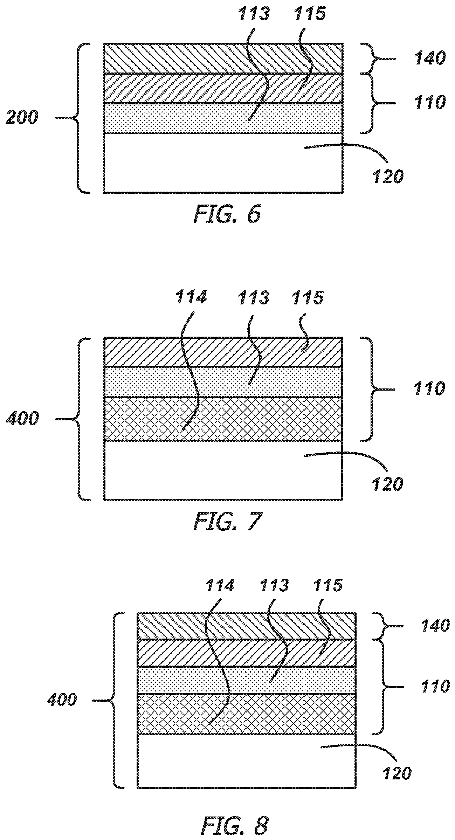

Some non-limiting examples of a selectively permeable membrane comprising a salt rejection layer are depicted in FIGS. 5 and 6. In FIGS. 5 and 6, membrane **200** comprises a salt rejection layer **115** that is disposed on crosslinked graphene oxide layer **113,** which is disposed on porous support **120.** In FIG. 6, selectively permeable membrane **200** further comprises protective coating **140** which is disposed on salt rejection layer **115.**

Some selectively permeable membranes, such as water permeable membranes, may comprise a crosslinked graphene oxide layer, such as a crosslinked graphene oxide composite layer, a silica composite layer, and a salt rejection layer. FIGS. 7-8 show some examples of selectively permeable membranes containing these layers. In FIG. 8, membrane **200** comprises a salt rejection layer **115** that is disposed on crosslinked graphene oxide layer **113,** which is disposed on silica composite layer **114,** which is disposed on porous support **120.** FIG. 8 also has these three layers, but also includes protective coating **140** which is disposed on salt rejection layer **115.**

In some embodiments, the membrane exhibits a normalized volumetric water flow rate of about 10-1000 gal·ft⁻²·day⁻¹·bar⁻¹(17-17000 L/hr/m²); about 20-750 gal·ft⁻²·day⁻¹·bar⁻¹ (34-1275 L/hr/m²); about 100-500 gal·ft⁻²·day⁻¹·bar⁻¹ (170-850 L/hr/m²); about 10-50 gal·ft⁻²·day⁻¹·bar⁻¹ (17-85 L/hr/m²); about 50-100 gal·ft⁻²·day⁻¹·bar⁻¹ (85-170 L/hr/m²); about 10-200 gal·ft⁻²·day⁻¹·bar⁻¹(17-340 L/hr/m²) ; about 200-400 gal·ft⁻²·day⁻¹·bar⁻¹ (340-680 L/hr/m²); about 400-600 gal·ft⁻²·day⁻¹·bar⁻¹ (680-1020 L/hr/m²); about 600-800 gal·ft⁻²·day⁻¹·bar⁻¹ (1020-1440 L/hr/m²); about 800-1000 gal·ft⁻²·day⁻¹·bar⁻¹ (1440-1700 L/hr/m²); at least about 10 gal·ft⁻²·day⁻¹·bar⁻¹ (17 L/hr/m²), about 20 gal·ft⁻²·day⁻¹·bar⁻¹ (34 L/hr/m²), about 100 gal·ft⁻²·day⁻¹·bar⁻¹ (170 L/hr/m²), about 200 gal·ft⁻²·day⁻¹·bar⁻¹ (340 L/hr/m²) or any normalized volumetric water flow rate in a range bounded by any combination of these values.

In some embodiments, a membrane may be a selectively permeable. In some embodiments, the membrane may be an osmosis membrane. In some embodiments, the membrane may be a water separation membrane. In some embodiments, the membrane may be a reverse osmosis (RO) membrane. In some embodiments, the selectively permeable membrane may comprise multiple layers, wherein at least one layer contains a GO-PVA-based composite.

### Crosslinked GO Layer

The membranes described herein comprise a crosslinked GO layer. Some crosslinked GO-layers can comprise a crosslinked GO composite layer. In some embodiments, the crosslinked GO layer, such as a crosslinked GO composite layer, is formed by reacting a mixture comprising a graphene oxide and a cross-linker. In some embodiments, the GO-based composite can also comprise one or more additives. In some embodiments, the GO-based composite is crosslinked wherein the constituents of the composite (e.g., graphene oxide compound, the cross-linker, and/or additives) are physically or chemically bound to any combination of each other to result in a material matrix.

In some embodiments, the crosslinked GO layer, such as a crosslinked GO composite layer, can have an interlayer distance or d-spacing of about 0.5-3 nm, about 0.6-2 nm, about 0.7-1.8 nm, about 0.8-1.7 nm, about 0.9-1.7 nm, about 1.2-2 nm, about 1.5-2.3 nm, about 1.61 nm, about 1.67 nm, about 1.55 nm or any distance in a range bounded by any of these values. The d-spacing can be determined by x-ray powder diffraction (XRD).

The crosslinked GO layer, such as a crosslinked GO composite layer, can have any suitable thickness. For example, some GO-based composite layers may have a thickness ranging from about 20 nm to about 1,000 nm, about 5-40 nm, about 10-30 nm, about 20-60 nm, about 50-100 nm, about 100-170 nm, about 170-200 nm, about 180-220 nm, about 200-250 nm, about 250-300 nm, about 300-400 nm, about 400-600 nm, about 600-800 nm, about 800-1000 nm, about 50 nm to about 500 nm, about 100 nm to about 400 nm, about 250 nm, or any thickness in a range bounded by any of these values.

### A. Graphene Oxide.

In general, graphene-based materials have many attractive properties, such as a 2-dimensional sheet-like structure with extraordinary high mechanical strength and nanometer scale thickness. The graphene oxide (GO), an exfoliated oxidation of graphite, can be mass produced at low cost. With its high degree of oxidation, graphene oxide has high water permeability and also exhibits versatility to be functionalized by many functional groups, such as amines or alcohols to form various membrane structures. Unlike traditional membranes, where the water is transported through the pores of the material, in graphene oxide membranes the transportation of water can be between the interlayer spaces. GO's capillary effect can result in long water slip lengths that offer fast water transportation rate. Additionally, the membrane's selectivity and water flux can be controlled by adjusting the interlayer distance of graphene sheets, or by the utilization of different crosslinking moieties.

In the membranes disclosed, a GO material may be optionally substituted. In some embodiments, the optionally substituted graphene oxide may contain a graphene which has been chemically modified, or functionalized. A modified graphene may be any graphene material that has been chemically modified, or functionalized. In some embodiments, the graphene oxide can be optionally substituted.

Functionalized graphene includes one or more functional groups not present in graphene oxide, such as functional groups that are not OH, COOH, or an epoxide group directly attached to a C-atom of the graphene base. Examples of functional groups that may be present in functionalized graphene include halogen, alkene, alkyne, cyano, ester, amide, or amine.

In some embodiments, at least about 99%, at least about 95%, at least about 90%, at least about 80%, at least about 70%, at least about 60%, at least about 50%, at least about 40%, at least about 30%, at least about 20%, at least about 10%, or at least about 5% of the graphene molecules may be oxidized or functionalized. In some embodiments, the graphene material is graphene oxide, which may provide selective permeability for gases, fluids, and/or vapors. In some embodiments, graphene oxide can also include reduced graphene oxide. In some embodiments, the graphene oxide compound can be graphene oxide, reduced-graphene oxide, functionalized graphene oxide, or functionalized and reduced-graphene oxide.

It is believed that there may be a large number (^{~}30%) of epoxy groups on GO, which may be readily reactive with hydroxyl groups at elevated temperatures. It is also believed that GO sheets have an extraordinary high aspect ratio which provides a large available gas/water diffusion surface as compared to other materials, and it has the ability to decrease the effective pore diameter of any substrate supporting material to minimize contaminant infusion while retaining flux rates. It is also believed that the epoxy or hydroxyl groups increases the hydrophilicity of the materials, and thus contributes to the increase in water vapor permeability and selectivity of the membrane.

In some embodiments, the optionally substituted graphene oxide may be in the form of sheets, planes or flakes. In some embodiments, the graphene material may have a surface area of about 100-5000 m²/g, about 150-4000 m²/g, about 200-1000 m²/g, about 500-1000 m²/g, about 1000-2500 m²/g, about 2000-3000 m²/g, about 100-500 m²/g, about 400-500 m²/g, or any surface area in a range bounded by any of these values.

In some embodiments, the graphene oxide may be platelets having 1, 2, or 3 dimensions with size of each dimension independently in the nanometer to micron range. In some embodiments, the graphene may have a platelet size in any one of the dimensions, or may have a square root of the area of the largest surface of the platelet, of about 0.05-100 µm, about 0.05-50 µm, about 0.1-50 µm, about 0.5-10 µm, about 1-5 µm, about 0.1-2 µm, about 1-3 µm, about 2-4 µm, about 3-5 µm, about 4-6 µm, about 5-7 µm, about 6-8 µm, about 7-10 µm, about 10-15 µm, about 15-20 µm, about 50-100 µm, about 60-80 µm, about 50-60 µm, about 25-50 µm, or any platelet size in a range bounded by any of these values.

In some embodiments, the GO material can comprise at least 70%, at least 75%, at least 80%, at least 85%, at least 90%, at least 95%, at least 97%, or at least 99% of graphene material having a molecular weight of about 5,000 Daltons to about 200,000 Daltons.

### B. Cross-linker.

The cross-linker comprises a compound having a nucleophilic group. It is believed that the nucleophilic group can react with an epoxide to form a covalent linkage between the nucleophilic atom of the cross-linker and one of the carbon atoms of the epoxide on the graphene oxide.

Unless otherwise indicated, when a compound or a chemical structure, for example graphene oxide, is referred to as being "optionally substituted," it includes a compound or a chemical structure that either has no substituents (i.e., unsubstituted), or has one or more substituents (i.e., substituted). The term "substituent" has the broadest meaning known in the art, and includes a moiety that replaces one or more hydrogen atoms attached to a parent compound or structure. In some embodiments, a substituent may be any type of group that may be present on a structure of an organic compound, which may have a molecular weight (e.g., the sum of the atomic masses of the atoms of the substituent) of 15-50 g/mol, 15-100 g/mol, 15-150 g/mol, 15-200 g/mol, 15-300 g/mol, or 15-500 g/mol. In some embodiments, a substituent comprises, or consists of: 0-30, 0-20, 0-10, or 0-5 carbon atoms; and 0-30, 0-20, 0-10, or 0-5 heteroatoms, wherein each heteroatom may independently be: N, O, S, Si, F, Cl, Br, or I; provided that the substituent includes one C, N, O, S, Si, F, Cl, Br, or I atom. Examples of substituents include, but are not limited to, alkyl, alkenyl, alkynyl, heteroalkyl, heteroalkenyl, heteroalkynyl, aryl, heteroaryl, hydroxy, alkoxy, aryloxy, acyl, acyloxy, alkylcarboxylate, thiol, alkylthio, cyano, halo, thiocarbonyl, O-carbamyl, N-carbamyl, O-thiocarbamyl, N-thiocarbamyl, C-amido, N-amido, S-sulfonamido, N-sulfonamido, isocyanato, thiocyanato, isothiocyanato, nitro, silyl, sulfenyl, sulfinyl, sulfonyl, haloalkyl, haloalkoxyl, trihalomethanesulfonyl, trihalomethanesulfonamido, amino, etc.

For convenience, the term "molecular weight" is used with respect to a moiety or part of a molecule to indicate the sum of the atomic masses of the atoms in the moiety or part of a molecule, even though it may not be a complete molecule.

The crosslinker is: 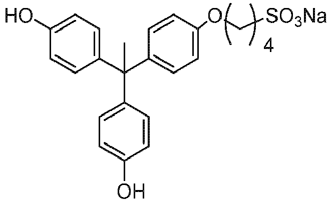 [CLC-4.1 or sodium 4-(4-(1,1-bis(4-hydroxyphenyl)ethyl)phenoxy)butane-1-sulfonate].

It is believed that when the cross-linker comprises an organic or sulfonyl-based salt, such as sodium salt, potassium salt, or lithium salt, the hydrophilicity of the resulting GO membrane could be increased, thereby increasing the total water flux.

It is believed that crosslinking the graphene oxide can also enhance the GO's mechanical strength and water permeable properties by creating strong chemical bonding and wide channels between graphene platelets to allow water to pass through the platelets easily, while increasing the mechanical strength between the moieties within the composite. In some embodiments, at least about 1%, about 5%, about 10%, about 20%, about 30%, about 40% about 50%, about 60%, about 70%, about 80%, about 90%, about 95%, or all of the graphene oxide platelets may be crosslinked. In some embodiments, the majority of the graphene material may be crosslinked. The amount of crosslinking may be estimated based on the weight of the cross-linker as compared with the total amount of graphene material.

In some embodiments, the weight ratio of cross-linker to GO (weight ratio = weight of cross-linker ÷ weight of graphene oxide) can be about 1-30, about 0.25-30, about 0.25-0.5, about 0.5-1.5, about 1-5, about 3-7, about 5-10, about 7-12, about 10-15, about 12-18, about 15-20, about 18-25, about 20-30, or about 1, about 3 (for example 3 mg of meta-phenylenediamine cross-linker and 1 mg of graphene oxide), about 5, about 7, about 15, or any ratio in a range bounded by any of these values.

In some embodiments, the mass percentage of the graphene oxide relative to the total weight of the crosslinked graphene oxide can be about 4-80 wt%, about 4-75 wt%, about 5-70 wt%, about 7-65 wt%, about 7-60 wt%, about 7.5-55 wt%, about 8-50 wt%, about 8.5-50 wt%, about 15-50 wt%, about 1-5 wt%, about 3-8 wt%, about 5-10 wt%, about 7-12 wt%, about 10-15 wt%, about 12-17 wt%, about 15-20 wt%, about 17-23 wt%, about 20-25 wt%, about 23-28 wt%, about 25-30 wt%, about 30-40 wt%, about 35-45 wt%, about 40-50 wt%, about 45-55 wt%, about 50-70 wt%, about 6 wt%, about 13 wt%, about 16 wt%, about 25 wt%, about 50 wt%, or any percentage in a range bounded by any of these values.

In some embodiments, the crosslinked graphene oxide composite layer contains about 29-31 atom% O. In some embodiments, the crosslinked graphene oxide layer contains about 67-70 atom% C.

### Crosslinked Silica Nanoparticle Layer.

According to the invention, at least one layer of the plurality of layers comprises a silica composite. The crosslinked silica nanoparticle layer comprises a silica nanoparticle and a polyvinyl alcohol composite, ora SNP-PVA composite. The silica composite is formed by reacting a mixture comprising silica nanoparticles and polyvinyl alcohol, which can result in covalent bonds being formed between the silica nanoparticles and the polyvinyl alcohol.

### Polyvinyl Alcohol Polymer

In some embodiments, the molecular weight of the PVA in the silica composite may be about 100-1,000,000 Daltons (Da), about 10,000-500,000 Da, about 10,000-50,000 Da, about 50,000-100,000 Da, about 70,000-120,000 Da, about 80,000-130,000 Da, about 90,000-140,000 Da, about 90,000-100,000 Da, about 95,000-100,000 Da, about 98,000 Da, or any molecular weight in a range bounded by any of these values.

### Silica Nanoparticles.

In some embodiments the silica nanoparticles in the silica nanoparticles layer may define an average size ranging from about 5-1,000 nm, from about 6-500 nm, from about 7-100 nm, about 1-20 nm, about 5-15 nm, or size in a range bounded by or between any of these values. The average size for a set of nanoparticles can be determined by taking the average volume and then determining the diameter associated with a comparable sphere which displaces the same volume to obtain the average size. In some embodiments, the mass ratio of PVA to silica nanoparticles may be about 1-20 (a mixture that contains 20 mg of PVA and 1 mg of silica nanoparticles would have a mass ratio of 20), about 1-10, about 1-5, about 2-4, about 3, about 3-5, about 5-10, about 10-20, or any mass ratio on a range bounded by any of these values.

### A. Additives.

The silica composite can further comprise an additive. In some embodiments, the additive can comprise a borate salt, chloride salt, terephthalic-based acid, or any combination thereof.

### Porous Support.

A porous support may be any suitable material and in any suitable form upon which a layer, such as a layers of a GO-based composite, may be deposited or disposed. In some embodiments, the porous support can comprise hollow fibers or porous material. In some embodiments, the porous support may comprise a porous material, such as a polymer or a hollow fiber. Some porous supports can comprise a non-woven fabric. In some embodiments, the polymer may be polyamide (Nylon), polyimide (PI), polyvinylidene fluoride (PVDF), polyethylene (PE), polyethylene terephthalate (PET), polysulfone (PSF), polyether sulfone (PES), and/or mixtures thereof. In some embodiments, the polymer can comprise PET.

### Salt Rejection Layer.

Some membranes further comprise a salt rejection layer, e.g. disposed on the crosslinked GO layer, such as a crosslinked GO composite layer. In some embodiments, the salt rejection layer can give the membrane low salt permeability. A salt rejection layer may comprise any material that is suitable for reducing the passage of ionic compounds, or salts. In some embodiments, the salt rejected, excluded, or partially excluded, can comprise KCI, MgCl₂, CaCl₂, NaCl, K₂SO₄, MgSO₄, CaSO₄, or Na₂SO₄. In some embodiments, the salt rejected, excluded, or partially excluded, can comprise NaCl. Some salt rejection layers comprise a polymer, such as a polyamide or a mixture of polyamides. In some embodiments, the polyamide can be a polyamide made from an amine (e.g. meta-phenylenediamine, para-phenylenediamine, ortho-phenylenediamine, piperazine, polyethylenimine, polyvinylamine, or the like) and an acyl chloride (e.g. trimesoyl chloride, isophthaloyl chloride, or the like). In some embodiments, the amine can be meta-phenylenediamine. In some embodiments, the acyl chloride can be trimesoyl chloride. In some embodiments, the polyamide can be made from a meta-phenylenediamine and a trimesoyl chloride (e.g. by a polymerization reaction of meta-phenylenediamine and trimesoyl chloride).

### Protective Coating.

Some membranes may further comprise a protective coating. For example, the protective coating can be disposed on top of the membrane to protect it from the environment. The protective coating may have any composition suitable for protecting a membrane from the environment, Many polymers are suitable for use in a protective coating such as one or a mixture of hydrophilic polymers, e.g. polyvinyl alcohol (PVA), polyvinyl pyrrolidone (PVP), polyethylene glycol (PEG), polyethylene oxide (PEO), polyoxyethylene (POE), polyacrylic acid (PAA), polymethacrylic acid (PMMA) and polyacrylamide (PAM), polyethylenimine (PEI), poly(2-oxazoline), polyethersulfone (PES), methyl cellulose (MC), chitosan, poly (allylamine hydrochloride) (PAH) and poly (sodium 4-styrene sulfonate) (PSS), and any combinations thereof. In some embodiments, the protective coating can comprise PVA.

### Methods of Fabricating Membranes.

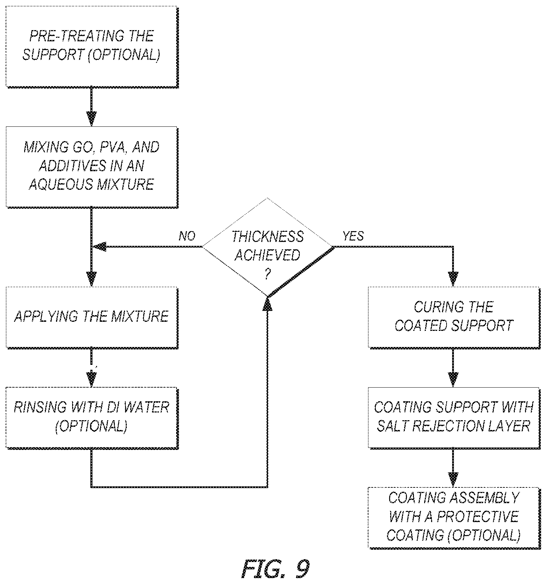

Some embodiments include methods for making the aforementioned membrane. Some methods include coating the porous support with a crosslinked GO layer, such as a crosslinked GO composite layer. The method comprises of the addition steps of coating a porous support with a crosslinked silica nanoparticle layer. According to the invention, the method involves coating the support with the silica composite layer before coating the support with the crosslinked GO layer. The method optionally comprises pre-treating the porous support. The method can further comprise applying a salt rejection layer. Some methods also include applying a salt rejection layer on the resulting assembly, followed by additional curing of resulting assembly. In some methods, a protective layer can also be placed on the assembly. An example of a possible embodiment of making the aforementioned membrane is shown in Figure 9.

### Optional Pretreatment.

In some embodiments, the porous support can be optionally pre-treated to aid in the adhesion of a composite layer, such as a silica composite or a crosslinked graphene oxide composite layer, to the porous support. In some embodiments, the pretreatment can be applied to the porous support and then dried. For some pretreatments, the treatment can be selected from dopamine, and polyvinyl alcohol. For some solutions, the aqueous solution can comprise about 0.01 wt%, about 0.02, about 0.05 wt% about 0.1 wt% PVA. In some embodiments, the pretreated support can be dried at a temperature of 25 °C, 50 °C, 65 °C, 75 °C, or 90 °C, for 2 minutes, 10 minutes, 30 minutes, 1 hour, or until the support is dry.

### Crosslinked Silica Nanoparticle Coating.

Coating the porous support with a crosslinked silica nanoparticle layer can comprise: (a) mixing silica nanoparticles and polyvinyl alcohol to obtain an aqueous mixture, (b) applying the mixture to the porous support to achieve a coated substrate; (c) repeating step (b) as necessary to achieve the desired thickness; and (d) curing the coated support.

Mixing silica nanoparticles and polyvinyl alcohol to obtain an aqueous mixture of can be accomplished by dissolving appropriate amounts of silica nanoparticles and polyvinyl alcohol in water. Some methods comprise mixing at least two separate aqueous mixtures, e.g., a silica nanoparticle based mixture and a polyvinyl alcohol based mixture, then mixing appropriate mass ratios of the mixtures together to achieve the desired results. Other methods comprise of dissolving appropriate amounts by mass of silica nanoparticles and polyvinyl alcohol within a single aqueous mixture. The mixture can be agitated at temperatures and times sufficient to ensure uniform dissolution of the solute. The result is a silica nanoparticle coating mixture.

Mixing silica nanoparticles and polyvinyl alcohol can further comprise adding an additive mixture to the dissolved silica nanoparticles and polyvinyl alcohol. The additive mixture can also be dissolved in an aqueous solution. The additive mixture can comprise additives selected from the group consisting of chloride salt, borate salt, and 2,5-dihydroxyterephthalic acid, all of which are described elsewhere herein.

Applying the silica nanoparticle mixture to the porous support can be done by methods known in the art for creating a layer of desired thickness. Applying the coating mixture to the substrate can be achieved by vacuum immersing the substrate into the coating mixture first, and then drawing the solution onto the substrate by applying a negative pressure gradient across the substrate until the desired coating thickness can be achieved. Applying the coating mixture to the substrate can be achieved by blade coating, spray coating, dip coating, die coating, or spin coating. The method can further comprise gently rinsing the substrate with deionized water after each application of the coating mixture to remove excess loose material. The coating may be done such that a composite layer of a desired thickness is created. The desired thickness of membrane can be, for example, about 5-2000 nm, about 5-1000 nm, about 1000-2000 nm, about 10-500 nm, about 500-1000 nm, about 50-300 nm, about 10-200 nm, about 10-100 nm, about 10-50 nm, about 20-50 nm, or about 50-500 nm. The number of layers can range from 1 to 250, from 1 to 100, from 1 to 50, from 1 to 20, from 1 to 15, from 1 to 10, or from 1 to 5. This process results in a fully coated substrate. The result is a silica nanoparticle coated support.

For some methods, curing the silica nanoparticle coated support can then be done at temperatures and time sufficient to facilitate crosslinking between the moieties of the aqueous mixture deposited on porous support. The coated support can be heated at a temperature of between about 80-200 °C, about 90-170 °C, or about 90-150 °C. The substrate can be exposed to heating for duration of between about 1 minute to about 5 hours, about 15 minutes to about 3 hours, or about 30 minutes; with the time required decreasing for increasing temperatures. The substrate can be heated at about 90-150 °C for about 1 minute to about 5 hours. The result is a cured membrane.

### Crosslinked GO Layer Coating.

For some methods, coating the porous support with a crosslinked GO layer can comprise: (a) mixing graphene oxide material, cross-linker, and optional additive mixture in an aqueous solution to create an aqueous mixture; (b) applying the mixture to a porous support to achieve a coated substrate; (c) repeating step (b) as necessary to achieve the desired thickness; and (d) curing the coated support.

In some embodiments, mixing an aqueous mixture of graphene oxide material, polyvinyl alcohol and optional additives can be accomplished by dissolving appropriate amounts of graphene oxide material, polyvinyl alcohol, and additives (e.g. borate salt, calcium chloride, terephthalic-based acid, or silica nanoparticles) in water. Some methods comprise mixing at least two separate aqueous mixtures, e.g., a graphene oxide based mixture and a polyvinyl alcohol and additives based aqueous mixture, then mixing appropriate mass ratios of the mixtures together to achieve the desired results. Other methods comprise creating one aqueous mixture by dissolving appropriate amounts by mass of graphene oxide material, polyvinyl alcohol, and additives dispersed within a single solution. In some embodiments, the mixture can be agitated at temperatures and times sufficient to ensure uniform dissolution of the solute. The result is a crosslinked GO coating mixture.

For some methods, there can be an additional step of resting the coating mixture at about room temperature for about 30 min to about 12 hours to facilitate prereacting of the constituents of the coating mixture. In some embodiments, resting the coating mixture can be done for about 1 hour to about 6 hours. In some embodiments, resting the coating mixture can be done for about 3 hours. It is believed that resting the coating solution allows the graphene oxide and the cross-linker to begin covalently bonding in order to facilitate a final crosslinked layer. The result is a crosslinked GO coating mixture.

Applying the mixture to the porous support can be done by methods known in the art for creating a layer of desired thickness. In some embodiments, applying the coating mixture to the substrate can be achieved by vacuum immersing the substrate into the coating mixture first, and then drawing the solution onto the substrate by applying a negative pressure gradient across the substrate until the desired coating thickness can be achieved. Applying the coating mixture to the substrate can be achieved by blade coating, spray coating, dip coating, die coating, or spin coating. The method can further comprise gently rinsing the substrate with deionized water after each application of the coating mixture to remove excess loose material. In some embodiments, the coating is done such that a composite layer of a desired thickness is created. The desired thickness of membrane can range from about 5-2000 nm, about 5-1000 nm, about 1000-2000 nm, about 10-500 nm, about 500-1000 nm, about 50-300 nm, about 10-200 nm, about 10-100 nm, about 10-50 nm, about 20-50 nm, about 50-500 nm, or any combination thereof. The number of layers can range from 1 to 250, from 1 to 100, from 1 to 50, from 1 to 20, from 1 to 15, from 1 to 10, or from 1 to 5. This process results in a fully coated substrate. The result is a coated support.

For some methods, curing the coated support can then be done at temperatures and time sufficient to facilitate crosslinking between the moieties of the aqueous mixture deposited on porous support. In some embodiments, the coated support can be heated at a temperature of between about 50-200 °C, about 90-170 °C, or about 70-150 °C. The substrate can be exposed to heating for duration of between about 1 minute to about 5 hours, about 15 minutes to about 3 hours, or about 30 minutes; with the time required decreasing for increasing temperatures. The substrate can be heated at about 70-150 °C for about 30 minutes. The result is a cured membrane.

### Application of Salt Rejection Layer.

The method for fabricating membranes further comprises applying a salt rejection layer to the membrane or a cured membrane to yield a membrane with a salt rejection layer. The salt rejection layer can be applied by dipping the cured membrane into a solution of precursors in mixed solvents. The precursors can comprise an amine and an acyl chloride. The precursors can comprise meta-phenylenediamine and trimesoyl chloride. In some embodiments, the concentration of meta-phenylenediamine can range from about 0.01-10 wt%, about 0.1-5 wt%, about 5-10 wt%, about 1-5 wt%, about 2-4 wt%, about 4 wt%, about 2 wt%, or about 3 wt%. The trimesoyl chloride concentration can range from about 0.001 vol% to about 1 vol%, about 0.01-1 vol%, about 0.1-0.5 vol%, about 0.1-0.3 vol%, about 0.2-0.3 vol%, about 0.1-0.2 vol%, or about 0.14 vol%. The mixture of meta-phenylenediamine and trimesoyl chloride can be allowed to rest for a sufficient amount of time such that polymerization can take place before the dipping occurs. In some embodiments, the method comprises resting the mixture at room temperature for about 1-6 hours, about 5 hours, about 2 hours, or about 3 hours. The method can comprises dipping the cured membrane in the coating mixture for about 15 seconds to about 15 minutes; about 5 seconds to about 5 minutes, about 10 seconds to about 10 minutes, about 5-15 minutes, about 10-15 minutes, about 5-10 minutes, or about 10-15 seconds.

The salt rejection layer can be applied by coating the cured membrane in separate solutions of aqueous meta-phenylenediamine and a solution of trimesoyl chloride in an organic solvent. The meta-phenylenediamine solution can have a concentration in a range of about 0.01-10 wt%, about 0.1-5 wt%, about 5-10 wt%, about 1-5 wt%, about 2-4 wt%, about 4 wt%, about 2 wt%, or about 3 wt%. In some embodiments, the trimesoyl chloride solution can have a concentration in a range of about 0.001-1 vol%, about 0.01-1 vol%, about 0.1-0.5 vol%, about 0.1-0.3 vol%, about 0.2-0.3 vol%, about 0.1-0.2 vol%, or about 0.14 vol%. The method comprises dipping the cured membrane in the aqueous meta-phenylenediamine for a period of about 1 second to about 30 minutes, about 15 seconds to about 15 minutes; or about 10 seconds to about 10 minutes. The method then comprises removing excess meta-phenylenediamine from the cured membrane. The method then comprises dipping the cured membrane into the trimesoyl chloride solution for a period of about 30 seconds to about 10 minutes, about 45 seconds to about 2.5 minutes, or about 1 minute. The method comprises subsequently drying the resultant assembly in an oven to yield a membrane with a salt rejection layer. The cured membrane can be dried at about 45 °C to about 200 °C for a period about 5 minutes to about 20 minutes, at about 75 °C to about 120 °C for a period of about 5 minutes to about 15 minutes, or at about 90 °C for about 10 minutes. This process results in a membrane with a salt rejection layer.

### Application of a Protective Coating.

The method for fabricating a membrane can further comprises subsequently applying a protective coating on the membrane. Applying a protective coating comprises adding a hydrophilic polymer layer. In some embodiments, applying a protective coating comprises coating the membrane with a PVA aqueous solution. Applying a protective layer can be achieved by methods such as blade coating, spray coating, dip coating, spin coating, and etcApplying a protective layer can be achieved by dip coating of the membrane in a protective coating solution for about 1 minute to about 10 minutes, about 1-5 minutes, about 5 minutes, or about 2 minutes. The method further comprises drying the membrane at a about 75 °C to about 120 °C for about 5 minutes to about 15 minutes, or at about 90 °C for about 10 minutes. The result is a membrane with a protective coating.

### Methods of Controlling Water or Solute Content.

In some embodiments, methods of extracting liquid water from an unprocessed aqueous solution containing dissolved solutes, for applications such as pollutant removal or desalination are described. In some embodiments, a method for removing a solute from an unprocessed solution comprises exposing the unprocessed solution to one or more of the aforementioned membranes. In some embodiments, the method further comprises passing the unprocessed solution through the membrane, whereby the water is allowed to pass through while solutes are retained, thereby reducing the solute content of the resulting water. In some embodiments, passing the unprocessed water containing solute through the membrane can be accomplished applying a pressure gradient across the membrane. Applying a pressure gradient can be by supplying a means of producing head pressure across the membrane. In some embodiments, the head pressure can be sufficient to overcome osmotic back pressure.

In some embodiments, providing a pressure gradient across the membrane can be achieved by producing a positive pressure in the first reservoir, producing a negative pressure in the second reservoir, or producing a positive pressure in the first reservoir and producing a negative pressure in the second reservoir. In some embodiments, a means of producing a positive pressure in the first reservoir can be accomplished by using a piston, a pump, a gravity drop, and/or a hydraulic ram. In some embodiments, a means of producing a negative pressure in the second reservoir can be achieved by applying a vacuum or withdrawing fluid from the second reservoir.

### EXAMPLES

### (only Examples relating to cross-linker CLC-4.1 are within the scope of the invention)

It has been discovered that embodiments of the selectively permeable membranes described herein have improved performance as compared to other selectively permeable membranes. These benefits are further demonstrated by the following examples, which are intended to be illustrative of the disclosure, but are not intended to limit the scope or underlying principles in any way. Only the Examples relating to cross-linker compound CLC 4.1 are within the scope of the invention.

### Example 1.1.1: Preparation of Graphene Oxide Dispersion

**GO Solution Preparation:** GO was prepared from graphite using the modified Hummers method. Graphite flakes (2.0 g, Sigma Aldrich, St. Louis, MO, USA, 100 mesh) were oxidized in a mixture of NaNO₃ (2.0 g, Aldrich), KMnO₄ of (10 g, Aldrich) and concentrated H₂SO₄ (96 mL, 98%, Aldrich) at 50 °C for 15 hours. The resulting paste like mixture was poured into 400 g of ice followed by adding 30 mL of hydrogen peroxide (30 %, Aldrich). The resulting solution was then stirred at room temperature for 2 hours to reduce the manganese dioxide, then filtered through a filter paper and washed with DI water. The solid was collected and then dispersed in DI water with stirring, centrifuged at 6300 rpm for 40 minutes, and the aqueous layer was decanted. The remaining solid was then dispersed in DI water again and the washing process was repeated 4 times. The purified GO was then dispersed in DI water under sonication (power of 10 W) for 2.5 hours to get the GO dispersion (0.4 wt%) as **GO-1.**

### Example 1.1.2: Synthesis of Cross-linker Compound CLC-3.1

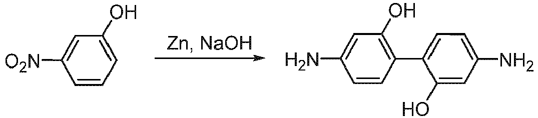

**4,4'-Diamino-[1,1'-biphenyl]-2,2'-diol (CLC-1) Preparation:** To a mixture of 3-nitrophenol (6.95g, 0.05 mol, Aldrich) in ethanol (50 mL, Aldrich), was added NaOH aqueous solution (25 mL, 12 M, Aldrich), and zinc powder (13 g, 0.2 mol, Aldrich) under a nitrogen atmosphere (Airgas, San Marcos, CA, USA). The resulting mixture was stirred for 10 hours, then filtered. The filtrate was acidified by acetic acid (Aldrich) to pH of 4, and a precipitate formed. The solid was collected by filtration, washing with water to neutral, and drying under vacuum using a vacuum oven (Thermo Scientific Precision 6500, Thermo Fisher Scientific Waltham, MA USA) at 60 °C at 2 torr to afford desired product (3.8 g, 70% yield), or **CLC-3.1.** The compound was characterized by LCMS: calc'd for C₁₂H₁₃N₂O₂ (M+H): 217.1; found: 217. ¹H NMR (DMSO): δ 8.9 (bs, 4H), 6.77 (bs, 2H), 6.15 (bs, 4H) ppm.

### Example 1.1.3: Synthesis of Cross-linker Compound CLC-3.2

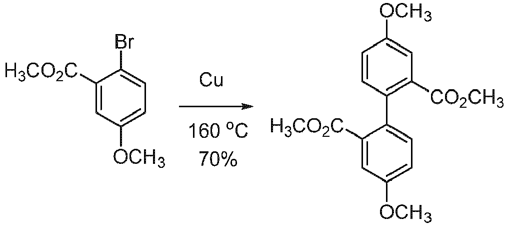

**Dimethyl 4,4'-dimethoxy-[1,1'-biphenyl]-2,2'-dicarboxylate (IC-1) Preparation:** A mixture of methyl 2-bromo-5-methoxybenzoate (10 g, 46.8 mmol, Aldrich), and freshly activated copper powder (12 g, 189 mmol, Aldrich) in anhydrous dimethylformamide (DMF) (50 mL, Aldrich) was heated at 160 °C for 16 hours under an argon atmosphere (Airgas). The reaction mixture was then cooled to room temperature and poured into ethyl acetate (300 mL, Aldrich). After filtering off the precipitate, the organic precipitate was washed with water and brine, dried over Na₂SO₄ (Aldrich), loaded on silica gel (Aldrich), and then purified by flash column chromatography using eluents of hexanes/dichloromethane (100% to 50%, Aldrich). The desired fraction was collected and removal of solvents by drying in a vacuum oven (Thermo Scientific Precision 6500, Thermo Fisher Scientific Waltham, MA USA) at 60 °C at 2 torr gave a pale yellow oil (4.7 g, in 70% yield), or **IC-1.** ¹H NMR (CDCl₃) δ 7.50 (d, J = 2.4 Hz, 2H), 7.13 (d, J = 8.3 Hz, 2H), 7.07 (dd, J = 2.4 and 8.3 Hz, 2H), 3.89 (s, 6H), 3.64 (2, 6H).

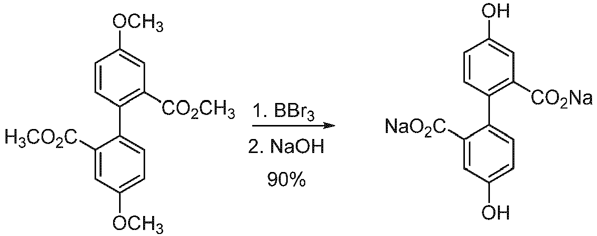

**4,4'-Dihydroxy-[1,1'-biphenyl]-2,2'-dicarboxylic acid (IC-2) Preparation:** To a solution of dimethyl 4,4'-dimethoxy-[1,1'-biphenyl]-2,2'-dicarboxylate (4.7 g, 14.2 mmol), or **IC-1**, in anhydrous dichloromethane (60 mL, Aldrich), BBr₃ solution in dichloromethane (60 mL, 1M, 60 mmol) (Aldrich) was added at -78 °C using evaporating liquid carbon dioxide (Airgas) to regulate the temperature. The whole solution was then kept stirring at -78 °C and then allowed to warm up slowly to room temperature overnight. The resulting mixture was then poured into an ice water mixture (200 mL) and then extracted three times by ethyl acetate (3 x 300 mL, Aldrich). The organic phase was washed with brine, dried over Na₂SO₄ (Aldrich), concentrated and reprecipitated in ethyl acetate/hexanes (Aldrich) to give a white solid (3.8 g, in 98% yield), or **IC-2.** ¹H NMR (DMSO) δ 12.20 (s, 2H), 9.56 (s, 2H), 7.20 (d, J = 2.0 Hz, 2H), 6.90 (d, J = 8.3 Hz, 2H), 6.86 (dd, J = 2.0 and 8.3 Hz, 2H). LCMS: calc'd for C₁₄H₉O₆ (M-H): 273.0; Found: 273.

**Sodium 4,4'-dihydroxy-[1,1'-biphenyl]-2,2'-dicarboxylate (CLC-3.2) Preparation:** To a solution of 4,4'-dihydroxy-[1,1'-biphenyl]-2,2'-dicarboxylic acid (3.8 g, 14 mmol), or **IC-2**, in 30 mL methanol (Aldrich), NaOH aqueous solution (1.12 g, 28 mmol in 10 mL water, Aldrich) was added. The whole mixture was stirred for 30 min and then the solvents were removed using a vacuum oven (Thermo Scientific Precision 6500, Thermo Fisher) at 60 °C at 2 torr to give a white solid (4.45 g, 100% yield), or **CLC-3.2.** ¹H NMR (D₂O) δ 7.14 (d, J = 8.4 Hz, 2H), 6.91 (d, J = 2.6 Hz, 2H), 6.82 (dd, J = 2.6 Hz and 8.4 Hz, 2H).

### Example 1.1.4: Synthesis of Cross-linker Compound CLC-4.1

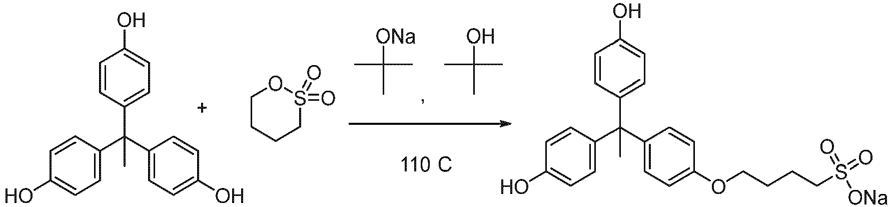

**Sodium 4-(4-(1,1-bis(4-hydroxyphenyl)ethyl)phenoxy)butane-1-sulfonate (CLC-4.1) Preparation:** To a stirring quantity of tert-butanol (90 mL, Aldrich) at room temperature, 4,4',4"-(ethane-1,1,1-triyl)triphenol (5 g, 16 mmol, Aldrich) was added followed by sodium tert-butoxide (1.57 g, 16 mmol, Aldrich). The mixture was then stirred at 110 °C for 15 minutes. Subsequently 1,4-butanesultone (1.67 mL, 16 mmol, Aldrich) was added to the mixture and the reaction was stirred overnight. After about 16 hours, the reaction was then cooled. To the solution hexanes (200 mL, Aldrich) were added and the solution was stirred for 30 minutes. The collected precipitate was then washed again for 30 minutes in fresh hexanes solution (about 500 mL, Aldrich). Then the collected precipitate was put in isopropanol (400 mL, Aldrich) and then stirred for 2 hours. The final step added hexanes (400 mL, Aldrich) to the solution and after 5 minutes of stirring, the precipitate was collected. The product was dried at 60 °C at 2 torr in a vacuum oven (Thermo Scientific Precision 6500, Thermo Fisher Scientific Waltham, MA USA) overnight to give a white powder (6.25 g, 82.4% yield), or **CLC-4.1.** ¹H-NMR (D₂O): δ 1.63 (4H, m), 1.77(3H, s), 2.72 (2H, t), 3.65 (2H, t), 6.51 (6H, t), 6.76 (6H, t).

### Example 1.1.5: Synthesis of Cross-linker Compound CLC-5.1

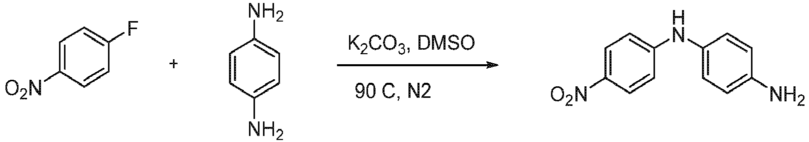

**N-(4-nitrophenyl)benzene-1,4-diamine (IC-3) Preparation:** Benzene-1,4-diamine (5.4 g, 50 mmol) (Aldrich) and 1-fluoro-4-nitrobenzene (5.3 mL, 50 mmol) (Aldrich) were dissolved in dimethylsulfoxide (75 mL, Aldrich) and potassium carbonate (13.8 g, 100 mmol, Aldrich) was added. The reaction mixture was then heated in an oil bath at 90 °C and stirred overnight under nitrogen atmosphere (Airgas). The reaction mixture was cooled to room temperature and added to DI water (250 mL) in a slow stream and stirred till a solid precipitated out. The reaction mixture was then filtered out and the resulting dark brown solid was washed with plenty of DI water. Flash column chromatography on silica gel (Aldrich) eluted with 20% to 40% ethyl acetate in hexanes (Aldrich) provided the compound (6.1 g, 53%), or **IC-3.**

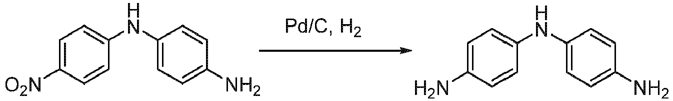

**4,4'-diaminodiphenylamine (CLC-5.1) Preparation:** A mixture of N-(4-nitrophenyl)benzene-1,4-diamine (2.0 g, 8.7 mmol), or **IC-3**, palladium on carbon (0.5g, 5%, Aldrich) in ethanol (200 mL, Aldrich) was hydrogenated at 30 psi overnight. After being filtered off the catalyst, the solution was concentrated, then re-precipitated in dichloromethane/hexanes to give a solid (1.15g, in 66% yield), or **CLC-5.1.** Confirmed by LCMS: calc'd for C₁₂H₁₄N₃ (M+H): 200.1; Found: 200.

### Example 1.1.6: Synthesis of Cross-linker Compound CLC-5.2

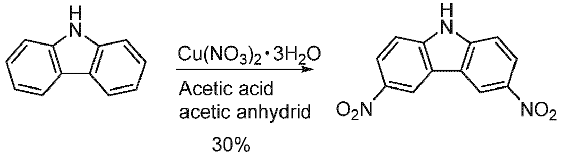

**3,6-dinitro-9H-carbazole (IC-4) Preparation:** A suspension of Cu(NO₃)₂·3H₂O (Aldrich) in acetic acid/acetic anhydride (20 mL/30mL, Aldrich) was stirred for 1.5 hours at room temperature, then to the mixture, 9H-carbazole (4.18 g, 25 mmol, Aldrich) was added in small portion with cold water bath at 15 °C. While the mixture was kept stirring, the mixture was warmed up to room temperature over a period of 30 min. and then subsequently heated at 90 °C for 30 min. After being cooled to room temperature, the mixture was poured into water (250 mL) and the resulting precipitate was filtered, washed with water, dried in a vacuum oven (Thermo Scientific Precision 6500, Thermo Fisher Scientific Waltham, MA USA) at 60 °C at 2 torr. The resulting solid was re-dissolved in acetone (Aldrich) and loaded on silica gel (Aldrich), then purified by flash column chromatography using eluents of hexanes/dichloromethane (3:2 to 1:3, Aldrich). The desired fractions were collected, concentrated and precipitated by methanol (Aldrich) to give a yellow solid (1.9 g, in 30% yield), or **IC-4.** Confirmed by LCMS: calculated for C₁₂H₆N₃O₄ (M-H): 256.0; Found: 256.

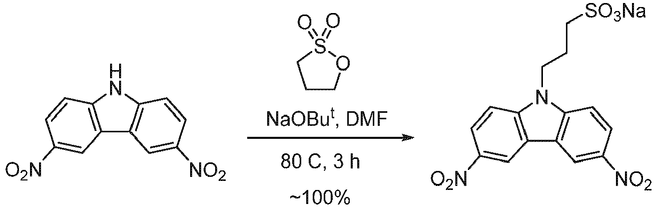

**Sodium 3-(3,6-dinitro-9H-carbazol-9-yl)propane-1-sulfonate (IC-5) Preparation:** To a suspension of 3,6-dinitro-9H-carbazole (0.74g, 2.9 mmol), or **IC-4**, in anhydrous DMF (20 mL, Aldrich), was added sodium t-butoxide (0.285g, 3 mmol, Aldrich), and the solution turned to red immediately. To the resulted solution, 1,3-propanesultone (0.44g, 3.6 mmol, Aldrich) was added, then the whole solution was then heated at 80 °C for 2.5 hours. After being cooled to room temperature, the mixture was then poured into isopropanol (300 mL, Aldrich) to give yellow precipitate, which was filtered and dried to give product (1.05 g, in 90% yield), or **IC-5.** Confirmed by LCMS: calculated for C₁₅H₁₂N₃NaO₇S: 401.0; Found: 401.

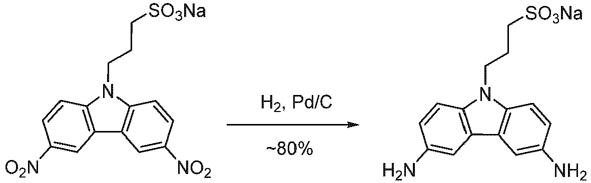

**Sodium 3-(3,6-diamino-9H-carbazol-9-yl)propane-1-sulfonate (CLC-5.2) Preparation:** A mixture of sodium 3-(3,6-dinitro-9H-carbazol-9-yl)propane-1-sulfonate (1.0 g, 2.5 mmol), or **IC-5**, palladium on carbon (5%, 0.5 g, Aldrich) in water/methanol (20 mL/100 mL, Aldrich) was hydrogenated at 30 psi for 5 hours. After being filtered off the catalyst, the solution was concentrated to 5 mL and then poured into isopropanol (50 mL, Aldrich). Then, the resulting suspension was poured into diethyl ether (200 mL, Aldrich) to give white precipitate, which was collected by filtration and dried in air as desired product (0.8 g, in 92% yield), or **CLC-5.2.** Confirmed by LCMS: calculated for C₁₅H₁₆N₃O₃S (M-Na): 318.1; Found: 318.

### Example 1.1.6: Synthesis of Cross-linker Compound CLC-5.3

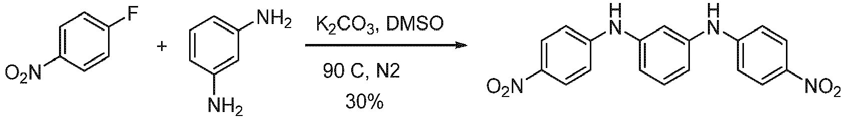

**N1,N3-bis(4-nitrophenyl)benzene-1,3-diamine (IC-6) Preparation:** A mixture of 4-fluoro-1-nitrobenzene (10.6 mL, 100 mmol, Aldrich), meta-phenylenediamine (5.4 g, 50 mmol, Aldrich) and potassium carbonate (16.6 g, 120 mmol, Aldrich) in anhydrous dimethyl sulfoxide (DMSO) (80 mL, Aldrich) was heated to 105 °C for 20 hours. The resulting mixture was poured into water (250 mL) slowly and then extracted with dichloromethane (500 mL, Aldrich). The organic was washed with brine, dried over Na₂SO₄, then loaded on silica gel (Aldrich) for flash column chromatography using eluents of dichloromethane/hexanes (1:10 to 3:2, Aldrich). The desired fractions were collected and concentrated to give orange solid (4.8 g, in 27% yield), **IC-6.** Confirmed by LCMS: calculated for C₁₈H₁₄N₄O₄: 350.1; Found: 350.

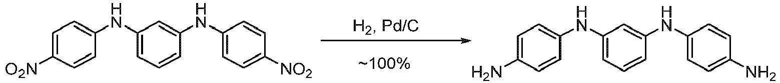

**N1,N1'-(1,3-phenylene)bis(benzene-1,4-diamine) (CLC-5.3) Preparation:** A suspension of N1,N3-bis(4-nitrophenyl)benzene-1,3-diamine (2.0 g), or **IC-6**, palladium on carbon (0.75 g, 5%, Aldrich) in water/ethanol (40 mL/80 mL, Aldrich) was hydrogenated under 30 psi for 16 hours. After being filtered off the catalyst, the solution was concentrated, poured into isopropanol (100 mL, Aldrich). The solid was collected after filtration and dried under vacuum using a vacuum oven (Thermo Scientific Precision 6500, Thermo Fisher) at 60 °C at 2 torr to give 1.0 g product in 60% yield, or **CLC-5.3.** Confirmed by LCMS: calculated for C₁₈H₁₉N₄ (M+H): 291; Found: 291.

### Example 1.1.7: Synthesis of Cross-linker Compound CLC-5.4

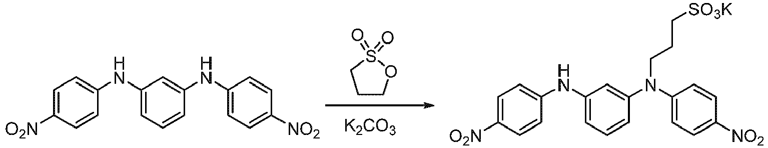

**3-((4-nitrophenyl)(3-((4-nitrophenyl)amino)phenyl)-amino)propane-1-sulfonate (IC-7) Preparation:** To a mixture of N1,N3-bis(4-nitrophenyl)benzene-1,3-diamine (1.0 g, 2.86 mmol), or **IC-6**, K₂CO₃ (0.414 g, 3 mmol) (Aldrich) in anhydrous dimethyl sulfoxide (DSMO) (10 mL) (Aldrich), was added 1,3-propanesultone (0.732 g, 6 mmol) (Aldrich). The whole mixture was then heated to 80 °C for 2 days. After cooling to room temperature, the mixture was then poured into isopropanol (200 mL) (Aldrich). The resulting orange precipitate was then filtered and then dried in a vacuum oven (Thermo Scientific Precision 6500, Thermo Fisher) at 60 °C at 2 torr for 3 hours to give a solid (1.4 g, in 96% yield), or **IC-7.** Confirmed by LCMS: calculated for C₂₁H₁₉KN₄O₇S (M⁻): 510.1; Found: 510.

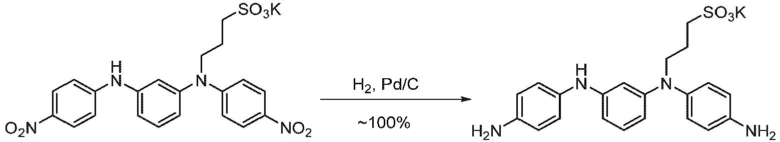

**Potassium 3-((4-aminophenyl)(3-((4-aminophenyl)amino)phenyl)-amino)propane-1-**sulfonate **(CLC-5.4) Preparation:** A suspension of potassium 3-((4-nitrophenyl)(3-((4-nitrophenyl)amino)phenyl)amino)propane-1-sulfonate (1.4 g), or **IC-7**, palladium on carbon (5%, 0.75 g) (Aldrich) in water/ethanol (40 mL/80 mL) (Aldrich) was hydrogenated under 30 psi for 16 hours. After being filtered off the catalyst, the solution was concentrated, poured into isopropanol (100 mL) (Aldrich). The solid was collected after filtration and dried under vacuum using a vacuum oven (Thermo Scientific Precision 6500, Thermo Fisher) at 60 °C at 2 torr to give 0.5 g product in 41% yield, or **CLC-5.4.** Confirmed by LCMS: calculated for C₂₁H₂₅N₄O₃S (M+H): 413; Found: 413.

### Example 1.1.8: Synthesis of Cross-linker Compound CLC-5.5 (Prophetic)

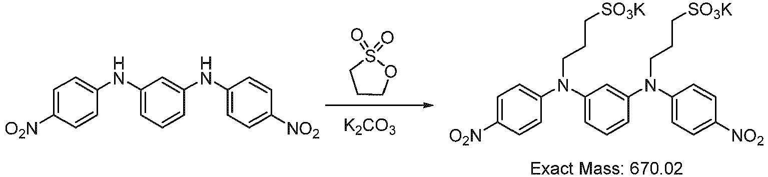

**Potassium 3,3'-(1,3-phenylenebis((4-nitrophenyl)azanediyl))bis-(propane-1-sulfonate) (IC-8) Preparation:** To a mixture of N1,N3-bis(4-nitrophenyl)benzene-1,3-diamine (1.0 g, 2.86 mmol), or **IC-6**, K₂CO₃ (0.414 g, 3 mmol, Aldrich) in anhydrous dimethyl sulfoxide (DSMO) (10 mL, Aldrich), was added 1,3-propanesultone (1.464 g, 12 mmol, Aldrich). The whole mixture was then heated to 80 °C for 2 days. After cooling to room temperature, the mixture can then be poured into isopropanol (200 mL, Aldrich). The resulting precipitate is then filtered and then dried in a vacuum oven (Thermo Scientific Precision 6500, Thermo Fisher) at 60 °C at 2 torr for 3 hours to give a solid, or **IC-8.**

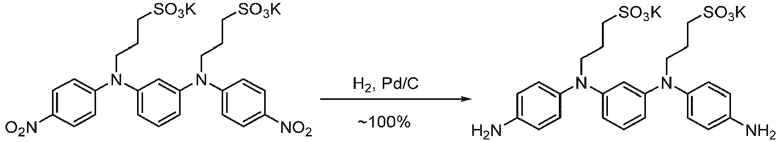

**Potassium 3,3'-(1,3-phenylenebis((4-aminophenyl)azanediyl))bis-(propane-1-sulfonate) (CLC-5.5) Preparation:** A suspension of potassium 3-((4-nitrophenyl)(3-((4-nitrophenyl)amino)phenyl)amino)propane-1-sulfonate (1.83 g), or **IC-8**, palladium on carbon (0.75 g, 5%, Aldrich) in water/ethanol (40 mL/80 mL, Aldrich) can be hydrogenated under 30 psi for 16 hours. After being filtered off the catalyst, the solution can be concentrated and then poured into isopropanol (100 mL, Aldrich). The solid can then be collected after filtration and dried under vacuum using a vacuum oven (Thermo Scientific Precision 6500, Thermo Fisher) at 60 °C at 2 torr to give the product, or **CLC-5.5.**

### Example 1.1.9: Synthesis of Cross-linker Compound CLC-6.1

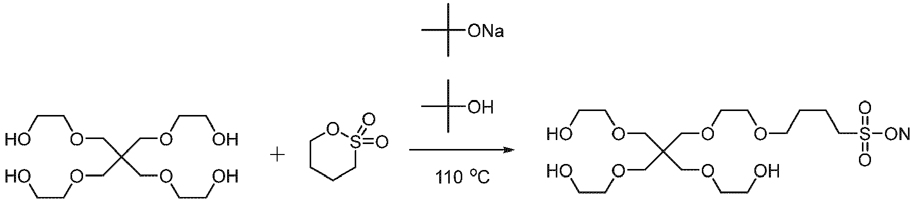

**Sodium 4-(2-(3-(2-hydroxyethoxy)-2,2-bis((2-hydroxyethoxy)-methyl)propoxy)ethoxy)butane-1-sulfonate (CLC-6.1) Preparation:** While stirring a solution of *tert*-butanol (100mL, Aldrich) at room temperature, pentaerythritol ethoxylate (7 g, 22.4 mmol, Aldrich 416150, Mₙ = 270 avg, ¾ EO/OH, Aldrich) was added followed by sodium *tert-*butoxide (2.15 g, 22.4 mmol, Aldrich). Continuing stirring, the mixture was then heated to 110 °C for 70 minutes. Subsequently, 1,4-butanesultone (2.29 mL, 22.4 mmol, Aldrich) was added to the mixture and the reaction stirred overnight. After 17 hours of reaction, the excess solution was decanted. The precipitates were then washed with hexanes (Aldrich). The precipitates were then dissolved in methanol (125 mL, Aldrich) and dried *in vacuo* in a 50 °C bath giving a viscous, transparent wax, or **CLC-6.1** (8.77 g, yield 73%). ¹H-NMR (D₂O): δ 1.7-1.8(4H, m), 2.90 (2H, t), 3.3 (8H, s), 3.4-3.7 (21H, m).

### Example 1.1.10: Synthesis of Cross-linker Compound CLC-6.2

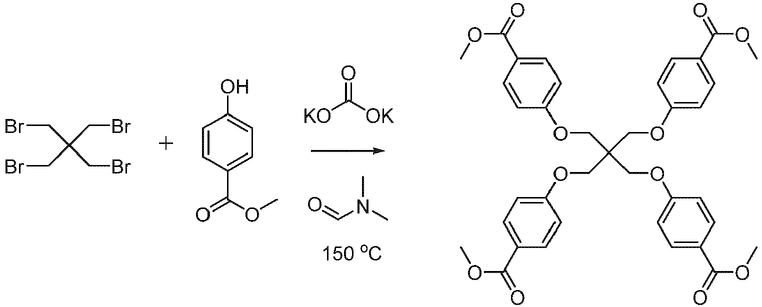

**Dimethyl 4,4'-((2,2-bis((4-(methoxycarbonyl)phenoxy)methyl)-propane-1,3-diyl)bis(oxy))dibenzoate (CLC-6.2) Preparation:** While stirring *N,N'*-dimethylformamide (100 mL) (Aldrich) at room temperature, pentaerythritol tetrabromide (6 g, 15.5 mmol, Aldrich) was added followed by methyl 4-hydroxybenzoate (9.42 g, 61.9 mmol, Aldrich), and then lastly potassium carbonate (27.80 g, 201.5 mmol, Aldrich). The resulting mixture was then heated to 150 °C and the reaction was stirred overnight. After about 22 hours, the reaction was then cooled to room temperature and the contents of the flask poured over DI water (1000 mL) and extracted with ethyl acetate (800 mL, Aldrich). The organic layer was collected and rotary evaporated (roto-vaped) under reduced pressure (R-215, Buchi Corp. New Castle, DE USA). The resulting product was then concentrated by performing column chromatography using a gradient of hexanes (Aldrich) to ethyl acetate (Aldrich) to elute the product to give a white powder, or **CLC-6.2** (7.19 g, 69% yield). ¹H-NMR (TCE): δ 3.8 (12H, s), 4.4 (8H, s), 6.9 (8H, d), 7.9 (8H, d).

### Example 1.1.11: Synthesis of Cross-linker Compound CLC-6.3

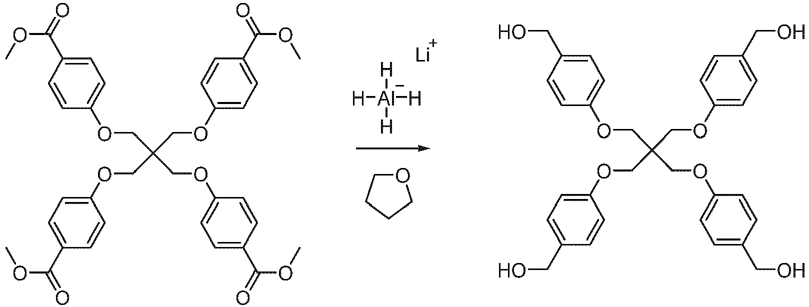

**Dihydrogen (((2,2-bis((4-(hydroxymethyl)phenoxy)methyl)-propane-1,3-diyl)bis(oxy))bis(4,1-phenylene))dimethanolate (CLC-6.3) Preparation:** A solution of 50 mL of anhydrous tetrahydrofuran was stirred and cooled in an ice bath at 0 °C. Then, dimethyl 4,4'-((2,2-bis((4-(methoxycarbonyl)phenoxy)methyl)propane-1,3-diyl)bis(oxy))dibenzoate (6.5g, 9.7 mmol), or **CLC-6.2**, was added. Next, LiAlH₄ (1M in diethyl ether, 58 mL, 58.2 mmol, Aldrich) cooled to 0 °C was added drop wise. Then, the solution was allowed to warm to room temperature and then stirred for 4 hours. The resulting solution was then poured over chilled water (1000 mL). Next HCI (1M, Aldrich) was added until neutralization. Then, the solution was extracted with ethyl acetate (800 mL, Aldrich). The resulting solution was purified by performing column chromatography using a gradient of ethyl acetate (Aldrich) and methanol (Aldrich) to give a white powder, or **CLC-6.3** (3.44 g, 63.5% yield). ¹H-NMR (DMSO): δ 4.25 (8H, s), 4.39 (8H, s), 5.04 (4H, s), 6.91 (8H, d), 7.21 (8H, d).

### Example 1.1.11: Synthesis of Cross-linker Compound CLC-6.4

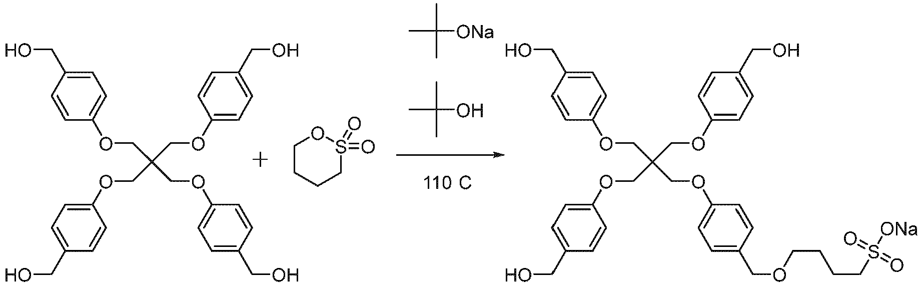

**Sodium 4-((4-(3-(4-(hydroxymethyl)phenoxy)-2,2-bis((4-(hydroxy-methyl)phenoxy)methyl)propoxy)benzyl)oxy)butane-1-sulfonate (CLC-6.4) Preparation:** To a stirring quantity of tert-butanol (60 mL, Aldrich) at room temperature dihydrogen (((2,2-bis((4-(hydroxymethyl)phenoxy)methyl)-propane-1,3-diyl)bis(oxy))bis-(4,1-phenylene))-dimethanolate, or **CLC-6.3**, was added followed by sodium tert-butoxide (566 mg, 5.89 mmol, Aldrich). Still stirring, the mixture was then heated to 110 °C for 40 minutes. Subsequently, 1,4-butane sultone (0.60 mL, 5.89mmol, Aldrich) was added and the reaction was stirred overnight after adding additional tert-butanol (75 mL, Aldrich) and N,N'-dimethylformamide (20 mL, Aldrich) to the reaction mixture. After 24 hours, the product was formed into precipitate by adding hexanes (400 mL, Aldrich). The resulting solution was then stirred for 15 minutes and then filtered. The collected precipitate was then placed back into hexanes (100 mL, Aldrich). After another 15 minutes, the precipitate was then filtered again. Then the precipitate was then added into a mixture of hexanes (100 mL, Aldrich) and isopropanol (30 mL, Aldrich). After 15 minutes, the precipitate was then filtered and then dried at 60 °C in a vacuum oven at 2 torr (Thermo Scientific Precision 6500, Thermo Fisher Scientific Waltham, MA USA) for 4 hours to give a white powder, or **CLC-6.4** (3.25 g, 76.8% yield). ¹H-NMR (DMSO): δ 1.56 (4H, m), 2.50 (2H, m), 4.25-4.38 (16H, m), 5.06 (2H, s), 6.93 (8H, d), 7.20 (8H, d).

### Example 2.1.1: Membrane Preparation - Support Pretreatment

**Obtaining a Support:** Porous substrates were obtained to be porous supports from various sources and materials: PET (Hydranautics, San Diego, CA USA), PET2 (Hydranautics), and polyamide (Nylon) (0.1 µm pore, Aldrich). Selected substrates, corresponding to embodiments shown in Table 1 and Table 2, were trimmed to a 7.6 cm diameter. In the embodiments, where the substrates were going to be in physical communication with a PVA containing layer, the substrates were pretreated with PVA. Unless otherwise specified, for all other embodiments the substrates were pretreated with dopamine.

**PVA Substrate Pre-treatment:** A 7.6 cm diameter substrate was dipped into a 0.05 wt % PVA (Aldrich) in DI water solution. The substrate was then dried in an oven (DX400, Yamato Scientific Co., Ltd. Tokyo, Japan) at 65 °C to yield a pretreated substrate.

**Dopamine Substrate Pre-treatment:** A 7.6 cm diameter substrate was dip-coated in a dopamine solution (2 g/L dopamine (Aldrich) and 1.3g/L Trizma base buffer (Aldrich) at pH 8.5. The dopamine was polymerized to form polydopamine on the substrate. Then, the polydopamine-coated substrate was dried in oven (DX400, Yamato Scientific Co., Ltd. Tokyo, Japan) at 65 °C. The result was a pre-treated substrate.

In the following Table 1, all of the examples fall outside of the scope of the invention.In Table 2, only those membranes made with cross-linker CLC-4.1 fall within the scope of the invention.

**Table 1: Membrane Embodiments without a SiO₂ Nanoparticle Layer or a Salt Rejection Layer.**

| **Embodiment** | **Cross-linker** | **Mass of Cross-linker to GO** | **Substrate Material** | **Additives** | **Application Method/Pre-Treatment** | **Coating Thickness (nm or lyr)** | **Curing** | |
|---|---|---|---|---|---|---|---|---|
| | | | | | | | **Temp (°C)** | **Time (min.)** |
| **MD-1.2.11.1.1** | CLC-1.1PVA | 83:16 | PET | N/A | Filtration/ PT:PVA | 200 | 90 | 30 |
| **MD-1.1.21.1.1** | CLC-2.1MPD | 1:1 | Nylon 0.1 µm Pore | N/A | Filtration/PT:Dopamine | 20 | 80 | 30 |
| **MD-1.1.21.1.2** | CLC-2.1 | 3:1 | Nylon 0.1 µm Pore | N/A | Filtration/PT:Dopamine | 20 | 80 | 30 |
| **MD-1.1.21.1.3** | CLC-2.1 | 7:1 | Nylon 0.1 µm Pore | N/A | Filtration/PT:Dopamine | 20 | 80 | 30 |
| **MD-1.1.22.1.1** | CLC-2.2 | 3:1 | Nylon 0.1 µm Pore | N/A | Filtration/PT:Dopamine | 20 | 80 | 30 |
| **MD-1.1.22.1.2** | CLC-2.2 | 7:1 | Nylon 0.1 µm Pore | N/A | Filtration/PT:Dopamine | 20 | 80 | 30 |
| **MD-1.1.31.1.1** | CLC-3.1 | 3:1 | Nylon 0.1 µm Pore | N/A | Filtration/PT:Dopamine | 20 | 80 | 30 |
| **MD-1.1.31.1.2** | CLC-3.1 | 7:1 | Nylon 0.1 µm Pore | N/A | Filtration/PT:Dopamine | 20 | 80 | 30 |
| **MD-1.1.31.1.3** | CLC-3.1 | 15:1 | Nylon 0.1 µm Pore | N/A | Filtration/PT:Dopamine | 20 | 80 | 30 |
| **MD-1.2.31.1.1** (Prop.) | CLC-3.1 | 3:1 | Nylon 0.1 µm Pore | N/A | Dip Coating/PT:Dopamine | 20 | 80 | 30 |
| **MD-1.1.32.1.1** (Prop.) | CLC-3.2 | 3:1 | Nylon 0.1 µm Pore | N/A | Filtration/PT:Dopamine | 20 | 80 | 30 |
| **MD-1.1.32.1.2** (Prop.) | CLC-3.2 | 7:1 | Nylon 0.1 µm Pore | N/A | Filtration/PT:Dopamine | 20 | 80 | 30 |
| **MD-1.1.32.1.3** (Prop.) | CLC-3.2 | 15:1 | Nylon 0.1 µm Pore | N/A | Filtration/PT:Dopamine | 20 | 80 | 30 |
| **MD-1.2.32.1.4** (Prop.) | CLC-3.2 | 3:1 | Nylon 0.1 µm Pore | N/A | Dip Coating/PT:Dopamine | 20 | 80 | 30 |
| **MD-1.1.41.1.1** | CLC-4.1 | 3:1 | Nylon 0.1 µm Pore | N/A | Filtration/PT:Dopamine | 20 | 80 | 30 |
| **MD-1.1.41.1.2** | CLC-4.1 | 7:1 | Nylon 0.1 µm Pore | N/A | Filtration/PT:Dopamine | 20 | 80 | 30 |
| **MD-1.1.41.1.3** | CLC-4.1 | 15:1 | Nylon 0.1 µm Pore | N/A | Filtration/PT:Dopamine | 20 | 80 | 30 |
| **MD-1.2.41.1.1** (Prop.) | CLC-4.1 | 3:1 | Nylon 0.1 µm Pore | N/A | Dip Coating/PT:Dopamine | 20 | 80 | 30 |
| **MD-1.1.51.1.1** | CLC-5.1 | 1:1 | Nylon 0.1 µm Pore | N/A | Filtration/PT:Dopamine | 20 | 80 | 30 |
| **MD-1.1.51.1.2** | CLC-5.1 | 3:1 | Nylon 0.1 µm Pore | N/A | Filtration/PT:Dopamine | 20 | 80 | 30 |
| **MD-1.1.51.1.3** | CLC-5.1 | 5:1 | Nylon 0.1 µm Pore | N/A | Filtration/PT:Dopamine | 20 | 80 | 30 |
| **MD-1.2.51.1.1** (Prop.) | CLC-5.1 | 3:1 | Nylon 0.1 µm Pore | N/A | Dip Coating/PT:Dopamine | 20 | 80 | 30 |
| **MD-1.1.52.1.1** (Prop.) | CLC-5.2 | 3:1 | Nylon 0.1 µm Pore | N/A | Filtration/PT:Dopamine | 20 | 80 | 30 |
| **MD-1.1.53.1.1** (Prop.) | CLC-5.3 | 3:1 | Nylon 0.1 µm Pore | N/A | Filtration/PT:Dopamine | 20 | 80 | 30 |
| **MD-1.1.54.1.1** (Prop.) | CLC-5.4 | 3:1 | Nylon 0.1 µm Pore | N/A | Filtration/PT:Dopamine | 20 | 80 | 30 |
| **MD-1.1.61.1.1** (Prop.) | CLC-6.1 | 3:1 | Nylon 0.1 µm Pore | N/A | Filtration/PT:Dopamine | 20 | 80 | 30 |
| **MD-1.1.62.1.1** (Prop.) | CLC-6.2 | 3:1 | Nylon 0.1 µm Pore | N/A | Filtration/PT:Dopamine | 20 | 80 | 30 |
| **MD-1.1.63.1.1** (Prop.) | CLC-6.3 | 3:1 | Nylon 0.1 µm Pore | N/A | Filtration/PT:Dopamine | 20 | 80 | 30 |
| **MD-1.1.64.1.1** (Prop.) | CLC-6.4 | 3:1 | Nylon 0.1 µm Pore | N/A | Filtration/PT:Dopamine | 20 | 80 | 30 |
| Notes: | | | | | | | | |
| [1] Numbering Scheme is the following: MD-J.K.LL.M.N | | | | | | | | |
| | J = 1 - no salt rej. layer/no SiO₂ nanoparticle layer, 2 - no salt rej. layer/with SiO₂ nanoparticle layer, 3 - salt rej. layer/no SiO₂ nanoparticle layer, 4 - salt rej. Layer/SiO₂ nanoparticle layer | | | | | | | |
| | K = 1 - by mixture filtration method, 2 - by mixture film/dip coating method, 3 - by layer by layer method | | | | | | | |
| | L = 11 - CLC-1 (PVA), 21 - CLC-2.1, 22 - CLC-2.2, 31 - CLC-3.1, 32 - CLC-3.2, 41 - CLC-4.1, 51 - CLC-5.1, 52 - CLC-5.2, 53 - CLC-5.3, 54 - CLC-5.4, 55 - CLC-5.5, 61 - CLC-6.1, 62 - CLC-6.2, 63 - CLC-6.3, 64 - CLC-6.4 | | | | | | | |
| | M = 1 - no protective coating, 2 - protective coating | | | | | | | |
| | N = device # within category | | | | | | | |
| [2] All PP and PVA/PP substrates are approximately 30 µm thick; whereas the nylon substrates can vary between 65-125 µm thick. | | | | | | | | |
| [3] (Prop.) - Indicates a prophetic example. | | | | | | | | |

**Table 2: Membrane Embodiments with a SiO₂ Nanoparticle Layer but no Salt Rejection Layer.**

| **Embodiment** | | | **Cross-linker** | **Mass of Cross-linker to GO** | **Substrate Material** | **Mass Ratio of PVA to Si-Nanoparticles** | **Application Method** | **Coating Thickness (nm or lyr)** | **Curing** | |
|---|---|---|---|---|---|---|---|---|---|---|
| | | | | | | | | | **Temp (°C)** | **Time (min.)** |
| **MD-2.2.11.1.1** (Prop.) | | | CLC-1.1 | 83:16 | PET | 3:1 | Film Coating/ PT:PVA | 200 | 90 | 30 |
| **MD-2.1.21.1.1** (Prop.) | | | CLC-2.1 | 3:1 | PET | 3:1 | Filtration/PT:Dopamine | 200 | 80 | 30 |
| **MD-2.1.22.1.1** (Prop.) | | | CLC-2.2 | 3:1 | PET | 3:1 | Filtration/PT:Dopamine | 200 | 80 | 30 |
| **MD-2.1.31.1.1** (Prop.) | | | CLC-3.1 | 3:1 | PET | 3:1 | Filtration/PT:Dopamine | 200 | 80 | 30 |
| **MD-2.1.32.1.1** (Prop.) | | | CLC-3.2 | 3:1 | PET | 3:1 | Filtration/PT:Dopamine | 200 | 80 | 30 |
| **MD-2.1.41.1.1** | | | CLC-4.1 | 3:1 | PET | 3:1 | Filtration/PT:Dopamine | 150 | 80 | 30 |
| **MD-2.1.41.1.2** | | | CLC-4.1 | 3:1 | PET | 3:1 | Filtration/PT:Dopamine | 200 | 80 | 30 |
| **MD-2.1.41.1.3** | | | CLC-4.1 | 3:1 | PET | 3:1 | Filtration/PT:Dopamine | 250 | 80 | 30 |
| **MD-2.1.51.1.1** (Prop.) | | | CLC-5.1 | 3:1 | PET | 3:1 | Filtration/PT:Dopamine | 200 | 80 | 30 |
| **MD-2.1.52.1.1** (Prop.) | | | CLC-5.2 | 3:1 | PET | 3:1 | Filtration/PT:Dopamine | 200 | 80 | 30 |
| **MD-2.1.53.1.1** (Prop.) | | | CLC-5.3 | 3:1 | PET | 3:1 | Filtration/PT:Dopamine | 200 | 80 | 30 |
| **MD-2.1.54.1.1** (Prop.) | | | CLC-5.4 | 3:1 | PET | 3:1 | Filtration/PT:Dopamine | 200 | 80 | 30 |
| **MD-2.1.61.1.1** (Prop.) | | | CLC-6.1 | 3:1 | PET | 3:1 | Filtration/PT:Dopamine | 200 | 80 | 30 |
| **MD-2.1.62.1.1** (Prop.) | | | CLC-6.2 | 3:1 | PET | 3:1 | Filtration/PT:Dopamine | 200 | 80 | 30 |
| **MD-2.1.63.1.1** (Prop.) | | | CLC-6.3 | 3:1 | PET | 3:1 | Filtration/PT:Dopamine | 200 | 80 | 30 |
| **MD-2.1.64.1.1** (Prop.) | | | CLC-6.4 | 3:1 | PET | 3:1 | Filtration/PT:Dopamine | 200 | 80 | 30 |
| Notes: | | | | | | | | | | |
| [1] Numbering Scheme is the following: MD-J.K.LL.M.N | | | | | | | | | | |
| | J = 1 - no salt rej. layer/no Si-nanoparticle layer, 2 - no salt rej. layer/with Si-nanoparticle layer, 3 - salt rej. layer/no Si-nanoparticle layer, | | | | | | | | | |
| | | 4 - salt rej. Layer/Si-nanoparticle layer | | | | | | | | |
| | K = 1 - by mixture filtration method, 2 - by mixture film coating method, 3 - by layer by layer method | | | | | | | | | |
| | L = 11 - CLC-1 (PVA), 21 - CLC-2.1, 22 - CLC-2.2, 31 - CLC-3.1, 32 - CLC-3.2, 41 - CLC-4.1, 51 - CLC-5.1, 52 - CLC-5.2, 53 - CLC-5.3, 54 - CLC-5.4, | | | | | | | | | |
| | | 55 - CLC-5.5, 61 - CLC-6.1, 62 - CLC-6.2, 63 - CLC-6.3, 64 - CLC-6.4 | | | | | | | | |
| | M = 1 - no protective coating, 2 - protective coating | | | | | | | | | |
| | N = device # within category | | | | | | | | | |
| [2] All PP and PVA/PP substrates are approximately 30 µm thick; whereas the nylon substrates can vary between 65-125 µm thick. | | | | | | | | | | |
| [3] (Prop.) - Indicates a prophetic example. | | | | | | | | | | |

### Example 2.1.2: Membrane Preparation - Crosslinked GO Coating Mixture Preparation

The procedure for creating a crosslinked GO coating mixture is dependent on the variety of cross-linker used. All cross-linkers with the exception of PVA have a resting step to ensure pre-reaction of the GO and the cross-linker before curing. Only the Examples relating to cross-linker compound CLC 4.1 are within the scope of the invention.

**Preparation of GO-PVA Coating Mixture:** A 10 mL of PVA solution (2.5 wt%) (**CLC**-**1**) was prepared by dissolving appropriate amounts of PVA (Aldrich) in DI water. Then, all the solutions GO-1 (1 mL) and PVA-1 in an appropriate amount to achieve the mass ratios of Table 1 were combined with 10 mL of DI water and sonicated for 6 minutes to ensure uniform mixing to create a crosslinked GO coating solution.

**Preparation of Non-PVA Cross-linker GO Coating Mixture:** First the GO dispersion, **GC-1**, was diluted with DI water to create a 0.1 wt% GO aqueous solution. Second, a 0.1 wt% aqueous solution of cross-linker was created by dissolving appropriate amounts of cross-linker (e.g., CLC-1, CLC-2.1, etc.) in DI water. For CLC-2.1 and CLC-2.2, metaphenylenediamine (Aldrich) and 3, 5-diaminobenzoic acid (MPD w/ COOH) (Aldrich) were both bought commercially. A coating mixture for the embodiment was then created by mixing the aqueous solutions of 0.1 wt% CLC-1 and 0.1 wt% GO at appropriate weight ratios to achieve the mass ratios in Table 1. The resulting solution was then rested for about 3 hours, or nominally until the GO and amine pre-reacted. The result was a crosslinked GO coating solution.

### Example 2.1.3: Membrane Preparation - Crosslinked Si-Nanoparticle Coating Mixture Preparation

A 10 mL PVA solution (2.5 wt%) was prepared by dissolving appropriate amounts of PVA **(CLC-1)** (Aldrich) in DI water. Similarly, a 10 mL Si-nanoparticle solution (2.5 wt%) was prepared by dissolving appropriate amounts of SiO₂ (5-15 nm, Aldrich) in DI water. Then, the solutions GO-1 (1 mL) and PVA-1 were combined in an appropriate amount to achieve the mass ratios of Table 2 and was further combined with 10 mL of DI water and sonicated for 6 minutes to ensure uniform mixing to create a crosslinked SiO₂ nanoparticle coating solution.

### Example 2.1.1: Membrane Preparation #1 - Membranes without a Crosslinked SiO₂ Nanoparticle Layer or a Salt Rejection Layer (not falling within the scope of the claims)

**Crosslinked GO Mixture Application by Filtration:** For the embodiments identified in Table 1 where the application method was by filtration, the crosslinked GO coating solution was filtered through the pretreated substrate under gravity to draw the solution through the substrate such that a coating layer of the desired thickness was deposited on the support. The resulting membrane was then placed in an oven (DX400, Yamato Scientific) at the identified temperature for the identified time to facilitate crosslinking. This process generated a membrane without either a crosslinked SiO₂ nanoparticle layer or a salt rejection layer.

**Crosslinked GO Mixture Application by Dip Coating:** For the embodiments identified in Table 1 where the application method was by dip coating, the pretreated substrate is then coated in the Crosslinked GO coating mixture by dip coating the substrate in the coating mixture. Next, the substrate is then rinsed completely in DI water to remove any excess particles. The aforementioned process can be repeated, dipping the substrate into the coating mixture and then rinsing with DI water for the prescribed number of cycles to prepare the desired number of layers or thickness of the coating layer. The resulting membrane is then kept in an oven (DX400, Yamato Scientific) at the identified temperature for the identified time facilitate further crosslinking. The result will then be a membrane without either a crosslinked SiO₂ nanoparticle layer or a salt rejection layer.

### Example 2.1.2: Membrane Preparation #2 - Membranes with a Crosslinked SiO₂ Nanoparticle Layer but without a Salt Rejection Layer (only membranes with a cross-linker CLC-4.1 fall within the scope of the claims)

**Crosslinked SiO₂ Nanoparticle Mixture Application by Filtration:** For the embodiments identified in Table 2, the crosslinked SiO2 nanoparticle coating solution was filtered through the pretreated substrate under gravity to draw the solution through the substrate such that a coating layer of the desired thickness was deposited on the support. The resulting membrane was then placed in an oven (DX400, Yamato Scientific) at 90 °C for 30 minutes to facilitate crosslinking. This process generated a coated substrate.

**Crosslinked GO Mixture Application by Filtration:** For the embodiments identified in Table 2, the crosslinked GO coating solution was filtered through the coated substrate under gravity to draw the solution through the substrate such that a coating layer of the desired thickness was deposited on the support. The resulting membrane was then placed in an oven (DX400, Yamato Scientific) at the identified temperature for the identified time to facilitate crosslinking. This process generated a membrane with a crosslinked SiO₂ nanoparticle layer but without a salt rejection layer.

### Example 2.2.1: Addition of a Salt Rejection Layer to a Membrane

To enhance the salt rejection capability of the membranes, selected embodiments, identified in Table 3 (which do not fall under the scope of the claims) for those without an SiO2 nanoparticle layer or in Table 4 (for which only cross-linker CLC-4.1 falls under the scope of the claims) for those with an SiO₂ nanoparticle layer, were additionally coated with a polyamide salt rejection layer. A 3.0 wt% MPD aqueous solution was prepared by diluting an appropriate amount of MPD (Aldrich) in DI water. A 0.14 vol% trimesoyl chloride solution was made by diluting an appropriate amount of trimesoyl chloride (Aldrich) in isoparrifin solvent (Isopar E & G, Exxon Mobil Chemical, Houston TX, USA). The GO-MPD coated membrane was then dipped in the aqueous solution of 3.0 wt% of MPD (Aldrich) for a period of 10 seconds to 10 minutes depending on the substrate and then removed. Excess solution remaining on the membrane was then removed by air dry. Then, the membrane was dipped into the 0.14 vol% trimesoyl chloride solution for 10 seconds and removed. The resulting assembly was then dried in an oven (DX400, Yamato Scientific) at 120 °C for 3 minutes. This process resulted in membranes with a salt rejection layer.

**Table 3: Membrane Embodiments without a SiO₂ Nanoparticle Layer with a Salt Rejection Layer.**

| **Embodiment** | | | **Cross-linker** | **Mass of Cross-linker to GO** | **Substrate Material** | **Additives** | **Application Method** | **Coating Thickness (nm or lyr)** | **Curing** | |
|---|---|---|---|---|---|---|---|---|---|---|
| | | | | | | | | | **Temp (°C)** | **Time (min.)** |
| **MD-3.1.31.1.1** | | | CLC-3.1 | 3:1 | Nylon 0.1 µm Pore | N/A | Filtration/PT:Dopamine | 20 | 80 | 30 |
| **MD-3.1.31.1.2** | | | CLC-3.1 | 7:1 | Nylon 0.1 µm Pore | N/A | Filtration/PT:Dopamine | 20 | 80 | 30 |
| **MD-3.1.32.1.1** (Prop.) | | | CLC-3.2 | 3:1 | Nylon 0.1 µm Pore | N/A | Filtration/PT:Dopamine | 20 | 80 | 30 |
| **MD-3.1.32.1.2** (Prop.) | | | CLC-3.2 | 7:1 | Nylon 0.1 µm Pore | N/A | Filtration/PT:Dopamine | 20 | 80 | 30 |
| **MD-3.1.41.1.1** | | | CLC-4.1 | 3:1 | Nylon 0.1 µm Pore | N/A | Filtration/PT:Dopamine | 20 | 80 | 30 |
| **MD-3.1.41.1.2** | | | CLC-4.1 | 7:1 | Nylon 0.1 µm Pore | N/A | Filtration/PT:Dopamine | 20 | 80 | 30 |
| **MD-3.1.51.1.1** (Prop.) | | | CLC-5.1 | 3:1 | Nylon 0.1 µm Pore | N/A | Filtration/PT:Dopamine | 20 | 80 | 30 |
| **MD-3.1.52.1.1** (Prop.) | | | CLC-5.2 | 3:1 | Nylon 0.1 µm Pore | N/A | Filtration/PT:Dopamine | 20 | 80 | 30 |
| **MD-3.1.53.1.1** (Prop.) | | | CLC-5.3 | 3:1 | Nylon 0.1 µm Pore | N/A | Filtration/PT:Dopamine | 20 | 80 | 30 |
| **MD-3.1.54.1.1** (Prop.) | | | CLC-5.4 | 3:1 | Nylon 0.1 µm Pore | N/A | Filtration/PT:Dopamine | 20 | 80 | 30 |
| **MD-3.1.61.1.1** (Prop.) | | | CLC-6.1 | 3:1 | Nylon 0.1 µm Pore | N/A | Filtration/PT:Dopamine | 20 | 80 | 30 |
| **MD-3.1.62.1.1** (Prop.) | | | CLC-6.2 | 3:1 | Nylon 0.1 µm Pore | N/A | Filtration/PT:Dopamine | 20 | 80 | 30 |
| **MD-3.1.63.1.1** (Prop.) | | | CLC-6.3 | 3:1 | Nylon 0.1 µm Pore | N/A | Filtration/PT:Dopamine | 20 | 80 | 30 |
| **MD-3.1.64.1.1** (Prop.) | | | CLC-6.4 | 3:1 | Nylon 0.1 µm Pore | N/A | Filtration/PT:Dopamine | 20 | 80 | 30 |
| Notes: | | | | | | | | | | |
| [1] Numbering Scheme is the following: MD-J.K.LL.M.N | | | | | | | | | | |
| | J = 1 - no salt rej. layer/no Si-nanoparticle layer, 2 - no salt rej. layer/with Si-nanoparticle layer, 3 - salt rej. layer/no Si-nanoparticle layer, | | | | | | | | | |
| | | 4 - salt rej. Layer/Si-nanoparticle layer | | | | | | | | |
| | K = 1 - by mixture filtration method, 2 - by mixture film/dip coating method, 3 - by layer by layer method | | | | | | | | | |
| | L = 11 - CLC-1 (PVA), 21 - CLC-2.1, 22 - CLC-2.2, 31 - CLC-3.1, 32 - CLC-3.2, 41 - CLC-4.1, 51 - CLC-5.1, 52 - CLC-5.2, 53 - CLC-5.3, 54 - CLC-5.4, | | | | | | | | | |
| | | 55 - CLC-5.5, 61 - CLC-6.1, 62 - CLC-6.2, 63 - CLC-6.3, 64 - CLC-6.4 | | | | | | | | |
| | M = 1 - no protective coating, 2 - protective coating | | | | | | | | | |
| | N = device # within category | | | | | | | | | |
| [2] All PP and PVA/PP substrates are approximately 30 µm thick; whereas the nylon substrates can vary between 65-125 µm thick. | | | | | | | | | | |
| [3] (Prop.) - Indicates a prophetic example. | | | | | | | | | | |

**Table 4: Membrane Embodiments with a SiO₂ Nanoparticle Layer and a Salt Rejection Layer.**

| **Embodiment** | | | **Cross-linker** | **Mass of Cross-linker to GO** | **Substrate Material** | **Mass Ratio of PVA to Si-Nanoparticl es** | **Mass % of Aq. Sol. in Protective Layer** | **Application Method** | **Coating Thickness (nm or lyr)** | **Curing** | |
|---|---|---|---|---|---|---|---|---|---|---|---|
| | | | | | | | | | | **Temp (°C)** | **Time (min.)** |
| **MD-2.2.11.1.1** (Prop.) | | | CLC-1.1 | 83:16 | PET | 3:1 | - | Film Coating/ PT:PVA | 200 | 90 | 30 |
| **MD-2.1.21.1.1** (Prop.) | | | CLC-2.1 | 3:1 | Nylon 0.1 µm Pore | 3:1 | - | Filtration/PT:Dopamine | 200 | 80 | 30 |
| **MD-2.1.22.1.1** (Prop.) | | | CLC-2.2 | 3:1 | Nylon 0.1 µm Pore | 3:1 | - | Filtration/PT:Dopamine | 200 | 80 | 30 |
| **MD-2.1.31.1.1** (Prop.) | | | CLC-3.1 | 3:1 | Nylon 0.1 µm Pore | 3:1 | - | Filtration/PT:Dopamine | 200 | 80 | 30 |
| **MD-4.1.32.1.1** (Prop.) | | | CLC-3.2 | 3:1 | Nylon 0.1 µm Pore | 3:1 | - | Filtration/PT:Dopamine | 200 | 80 | 30 |
| **MD-4.1.41.1.1** | | | CLC-4.1 | 3:1 | Nylon 0.1 µm Pore | 3:1 | - | Filtration/PT:Dopamine | 200 | 80 | 30 |
| **MD-4.1.41.2.1** | | | CLC-4.1 | 3:1 | Nylon 0.1 µm Pore | 3:1 | 1.5 wt% PVA | Filtration/PT:Dopamine | 150 | 80 | 30 |
| **MD-4.1.41.2.2** | | | CLC-4.1 | 3:1 | Nylon 0.1 µm Pore | 3:1 | 2.5 wt% PVA | Filtration/PT:Dopamine | 250 | 80 | 30 |
| **MD-4.1.41.2.3** | | | CLC-4.1 | 3:1 | Nylon 0.1 µm Pore | 3:1 | 5 wt% PVA | Filtration/PT:Dopamine | 150 | 80 | 30 |
| **MD-4.1.41.2.4** | | | CLC-4.1 | 3:1 | Nylon 0.1 µm Pore | 3:1 | 5 wt% PVA | Filtration/PT:Dopamine | 200 | 80 | 30 |
| **MD-4.1.41.2.5** | | | CLC-4.1 | 3:1 | Nylon 0.1 µm Pore | 3:1 | 5 wt% PVA | Filtration/PT:Dopamine | 250 | 80 | 30 |
| **MD-4.1.51.1.1** (Prop.) | | | CLC-5.1 | 3:1 | Nylon 0.1 µm Pore | 3:1 | - | Filtration/PT:Dopamine | 200 | 80 | 30 |
| **MD-4.1.52.1.1** (Prop.) | | | CLC-5.2 | 3:1 | Nylon 0.1 µm Pore | 3:1 | - | Filtration/PT:Dopamine | 200 | 80 | 30 |
| **MD-4.1.53.1.1** (Prop.) | | | CLC-5.3 | 3:1 | Nylon 0.1 µm Pore | 3:1 | - | Filtration/PT:Dopamine | 200 | 80 | 30 |
| **MD-4.1.54.1.1** (Prop.) | | | CLC-5.4 | 3:1 | Nylon 0.1 µm Pore | 3:1 | - | Filtration/PT:Dopamine | 200 | 80 | 30 |
| **MD-4.1.61.1.1** (Prop.) | | | CLC-6.1 | 3:1 | Nylon 0.1 µm Pore | 3:1 | - | Filtration/PT:Dopamine | 200 | 80 | 30 |
| **MD-4.1.62.1.1** (Prop.) | | | CLC-6.2 | 3:1 | Nylon 0.1 µm Pore | 3:1 | - | Filtration/PT:Dopamine | 200 | 80 | 30 |
| **MD-4.1.63.1.1** (Prop.) | | | CLC-6.3 | 3:1 | Nylon 0.1 µm Pore | 3:1 | - | Filtration/PT:Dopamine | 200 | 80 | 30 |
| **MD-4.1.64.1.1** (Prop.) | | | CLC-6.4 | 3:1 | Nylon 0.1 µm Pore | 3:1 | - | Filtration/PT:Dopamine | 200 | 80 | 30 |
| Notes: | | | | | | | | | | | |
| [1] Numbering Scheme is the following: MD-J.K.LL.M.N | | | | | | | | | | | |
| | J = 1 - no salt rej. layer/no Si-nanoparticle layer, 2 - no salt rej. layer/with Si-nanoparticle layer, 3 - salt rej. layer/no Si-nanoparticle layer, | | | | | | | | | | |
| | | 4 - salt rej. Layer/Si-nanoparticle layer | | | | | | | | | |
| | K = 1 - by mixture filtration method, 2 - by mixture film/dip coating method, 3 - by layer by layer method | | | | | | | | | | |
| | L = 11 - CLC-1 (PVA), 21 - CLC-2.1, 22 - CLC-2.2, 31 - CLC-3.1, 32 - CLC-3.2, 41 - CLC-4.1, 51 - CLC-5.1, 52 - CLC-5.2, 53 - CLC-5.3, 54 - CLC-5.4, | | | | | | | | | | |
| | | 55 - CLC-5.5, 61 - CLC-6.1, 62 - CLC-6.2, 63 - CLC-6.3, 64 - CLC-6.4 | | | | | | | | | |
| | M = 1 - no protective coating, 2 - protective coating | | | | | | | | | | |
| | N = device # within category | | | | | | | | | | |
| [2] All PP and PVA/PP substrates are approximately 30 µm thick; whereas the nylon substrates can vary between 65-125 µm thick. | | | | | | | | | | | |
| [3] (Prop.) - Indicates a prophetic example. | | | | | | | | | | | |

### Example 2.2.2: Preparation of a Membrane with a Protective Coating

Selected membranes were coated with a protective layer as shown in Table 4. For **MD-4.1.41.2.1**, a PVA solution of 1.5 wt% was prepared by stirring 15 g of PVA (Aldrich) in 1 L of DI water at 90 °C for 20 minutes until all granules dissolve. The solution was then cooled room temperature. The substrate was immersed in the solution for 10 minutes and then removed. Excess solution remaining on the membrane was then removed by paper wipes. The resulting assembly was dried in an oven (DX400, Yamato Scientific) at 90 °C for 30 minutes. A membrane with a protective coating can thus be obtained. Similar membranes were also coated by varying the concentration of PVA accordingly.

### Comparative Example 2.1.1: Preparation of Comparative Membranes

For Comparative Example 2.1.1, comparative membranes (CMDs), CMD-1.1 thru CMD-1.2 were created by stock substrate components of polysulfone membrane (PSF) (Sterlitech Corporation, Kent, WA, USA) and polypropolyene (PP) filtration membrane (Celgard LLC, Charlotte, North Carolina, USA). For CMD-1.3, a PVA/PP membrane was created immersions of a PP filtration membrane in a PVA/water solution (Aldrich) for 10 minutes a then drying the membrane in an oven (DX400, Yamato Scientific) at 90 °C for about 30 minutes.

Comparative membranes CMD-2.1.1 thru CMD-2.2.2 were also made using methods similar to Examples 2.1.1 thru Example 2.2.1 for membranes without a SiO₂ nanoparticle layer with the exceptions outlined in Table 5.

**Table 5: Comparative Membranes.**

| **Membrane** | **Method** | **Cross-linker** | **Mass of Cross-linker to GO** | **Substrate Material** | **Coating Thickness (nm or lyr)** |
|---|---|---|---|---|---|
| **CMD-1.1** | n/a | - | - | PSF | - |
| **CMD-1.2** | n/a | - | - | Stretched PP | - |
| **CMD-1.3** | n/a | - | - | Stretched PP/PVA | n/a |
| **CMD-2.1.1** | Filtration | EDA | 1:1 | Nylon 0.1 µm Pore | 20 |
| **CMD-2.1.2** | Filtration | EDA | 3:1 | Nylon 0.1 µm Pore | 20 |
| **CMD-2.1.3** | Filtration | EDA | 7:1 | Nylon 0.1 µm Pore | 20 |
| **CMD-2.2.1** | Filtration | PPD | 3:1 | Nylon 0.1 µm Pore | 20 |
| **CMD-2.2.2** | Filtration | PPD | 7:1 | Nylon 0.1 µm Pore | 20 |
| Notes: | | | | | |
| [1] All PP and PVA/PP substrates are approximately 30 µm thick; whereas the nylon substrate varies between 65-125 µm thick. | | | | | |
| [2] All comparative examples with GO and a comparative cross-linker (e.g. ethylenediamine [EDA] or para-phenylenediamine [PPD]) the composite was cured in an oven (DX400, Yamato Scientific) at 80 °C for 30 min to facilitate further crosslinking. | | | | | |

### Example 3.1: Membrane Characterization

**XPS Analysis:** Membranes MD-1.1.31.1.1 and MD-1.1.41.1.1 were analyzed X-ray photoelectron spectroscopy (XPS) to determine the relative distribution of the atomic spectra. The procedures for XPS are similar to those known by those skilled in the art. The XPS analysis, shown in Table 6, indicates an increase of nitrogen in the GO-MPD membrane, due to the cross-linking of amine groups in the cross-linker with GO, as well as partial reduction oxygen as the epoxide was reduced.

**Table 6: Analysis Result of GO and GO-Crosslinked Membranes.**

| **Samples** | **Na** | **C** | **N** | **O** | **S** | **Cl** |
|---|---|---|---|---|---|---|
| Ref (GO) | - | 65.2 | - | 34.0 | 0.8 | - |
| GO-CLC-3.1 | - | 68.8 | 1.1 | 29.9 | 0.2 | - |
| GO-CLC 4.1 | 0.5 | 68.4 | 1.0 | 29.8 | 0.3 | - |

### Example 4.1: Performance Testing of Selected Membranes

**Mechanical Strength Testing:** The water flux of GO-based membrane coated on varies porous substrates is anticipated to be very high, or comparable with porous polysulfone substrate widely used in current reverse osmosis membranes.

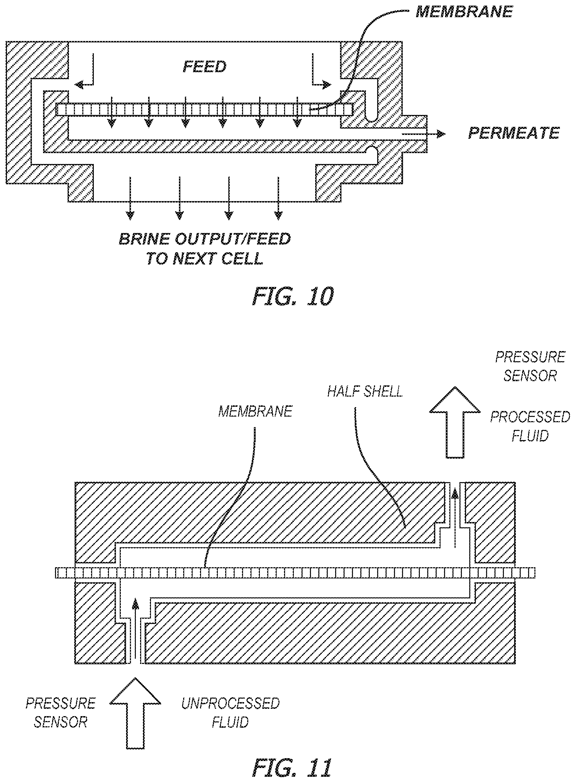

To test the mechanical strength capability, the membranes are planned to be tested by placing them into a laboratory apparatus similar to the one shown in Figure 10. Then, once secure in the test apparatus, the membrane can then exposed to the unprocessed fluid at a gauge pressure of 50 psi. The water flux through the membrane can be recorded at different time intervals to see the flux over time. The water flux is planned to be recorded at intervals of 15 minutes, 60 minutes, 120 minutes, and 180 minutes (when possible).

From the data collected, it was shown that the GO-PVA-based membrane can withstand reverse osmosis pressures while providing sufficient flux.

**Dehydration Characteristics** - **Water Vapor Permeability Testing:** The water vapor permeability of the membranes was tested. For the gas leakage, Nitrogen was chosen to mimic air.

A sample diagram of the setup is shown in Figure 11. The test setup used consisted of a cross-flow test cell (CF016A, Sterlitech) which forms two plenums on either side, each with its own inlet and an outlet. The membrane being measured was placed in the 45 mm by 45 mm testing chamber and sandwiched between the two halves of the test cell to create two sealed plenums when the shells are mated, each plenum in fluid communication only through the membrane. Then the inlets and outlets were chosen such that the fluid flow in each plenum was in a counter-flow configuration. Into one side, the wet side, wet N₂ gas was sent into the setup and then exited with some water vapor and gas permeating the membrane sample. Into the second side, the dry side, sweep or dry N₂ gas was sent into the setup and then vented, with the wet gas being entrained from the membrane. Humidity and Temperature were measured at three positions: input and output on the wet N₂ gas side, and output on the dry N₂ gas side using a Humidity/Temperature Transmitters (RHXL3SD, Omega Engineering, Inc., Stamford, CT, USA). In addition the flow rate was also measured for both wet and dry sides by two Air Flow Sensors (FLR1204-D, Omega). In addition, the gas pressure was measured on both the wet and dry side by two Digital Pressure Gauges (Media Gauge MGA-30-A-9V-R, SSI Technologies, Inc., Janesville, WI, USA).

For the measurements, selected membranes were placed in the setup and the wet side inlet was set to a relative humidity of between about 80% to about 90%. The dry side inlet had a relative humidity of 0%. The upstream pressure for the wet gas stream was set to 0.13 psig. The upstream pressure for the dry gas stream was set to 0.03 psi g. From the instruments, the water vapor pressure and absolute humidity at the three measurement stations (input and output on the wet N₂ gas side, and output on the dry N₂ gas side) was derived by using the measured temperature and humidity. Then the water vapor transmission rate was derived from the absolute humidity difference, flow rate, and exposed area of the membrane. Lastly the water vapor permeability was derived from the water vapor transmission rate and the water vapor pressure difference between the two plenums. The nitrogen flow rate was derived from the dry N₂ output and the wet N₂ inputs as well as the water vapor transmission rate.

**Dehydration Characteristics** - **Nitrogen Leakage Testing:** The gas leakage of the membranes was tested. For the gas leakage, Nitrogen was chosen to mimic air. For these tests, the same test setup was used as in the Water Vapor Permeability testing with the exception that the dry N₂ air inlet was closed and the dry N₂ outlet was, instead of being vented to atmosphere, was vented to a flow measurement instrument (D800286 Gilibrator-2 Standard Air Flow Calibrator; Sensidyne, St. Petersburg, FL, USA) with a normal test cell (20 cc to 6 LPM, Sensidyne) or a low-flow test cell (1 cc/min to 250 cc/min, Sensidyne) to measure the flow leakage through the membrane. For N₂ flow rates at about 1 cc/min or below, a 0.5 mL manual bubble flow meter was used (#23771, Aldrich), which has a range of about 0.03 cc/min to about 5 cc/min, to determine the leakage rate instead of the aforementioned flow measurement instrument.

For the measurements, the selected membranes were placed in the setup and the wet side inlet was set to a relative humidity of between about 80% to about 90%. The dry side inlet was closed to seal off the portion upstream of the flow measurement instrument so that only gas leaked through the membrane would go to the flow measurement instrument. The upstream pressure for the wet gas stream was set to 0.13 psig and the leakage of the N₂ through the membrane was measured.

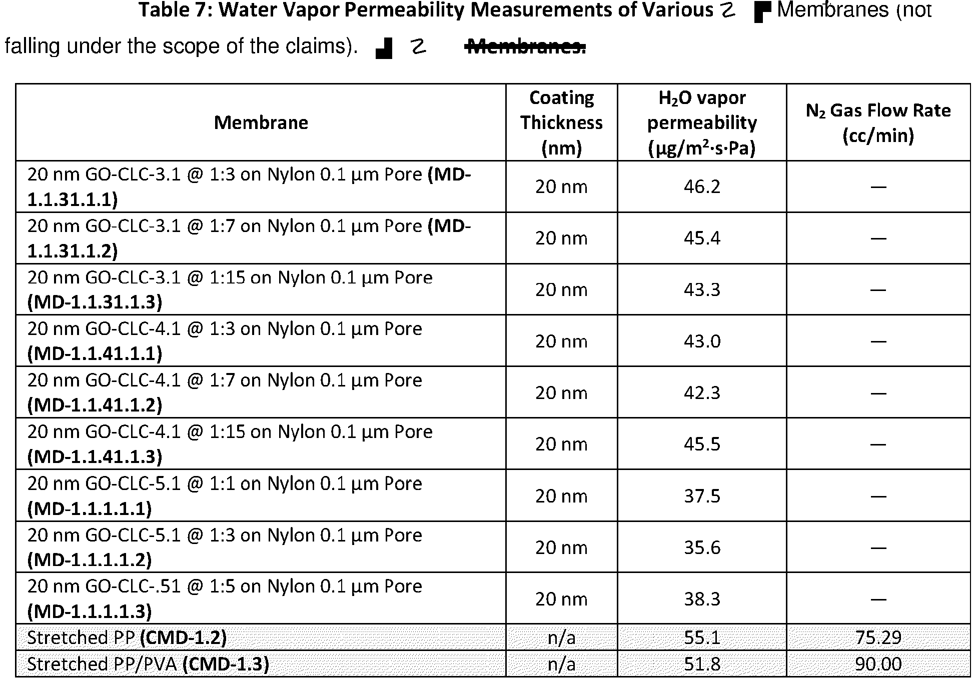

**Water Flux and Salt Rejection Testing:** The water flux of GO-based membrane coating on a porous substrate was observed to be very high, which is comparable with porous polysulfone substrate widely use in current reverse osmosis membranes.

To test the salt rejection capability, the reverse osmosis membranes were tested in a test cell similar to that disclosed in Figure 10 to see the membranes' ability to reject salt and retain adequate water flux by exposing the membrane to a 1500 ppm NaCl solution at 225 psi. After the membrane reached steady state, approximately after 120 minutes, the salt rejection and the water flux was recorded. As seen in Table 8, the membranes demonstrated high NaCl salt rejection and good water flux.

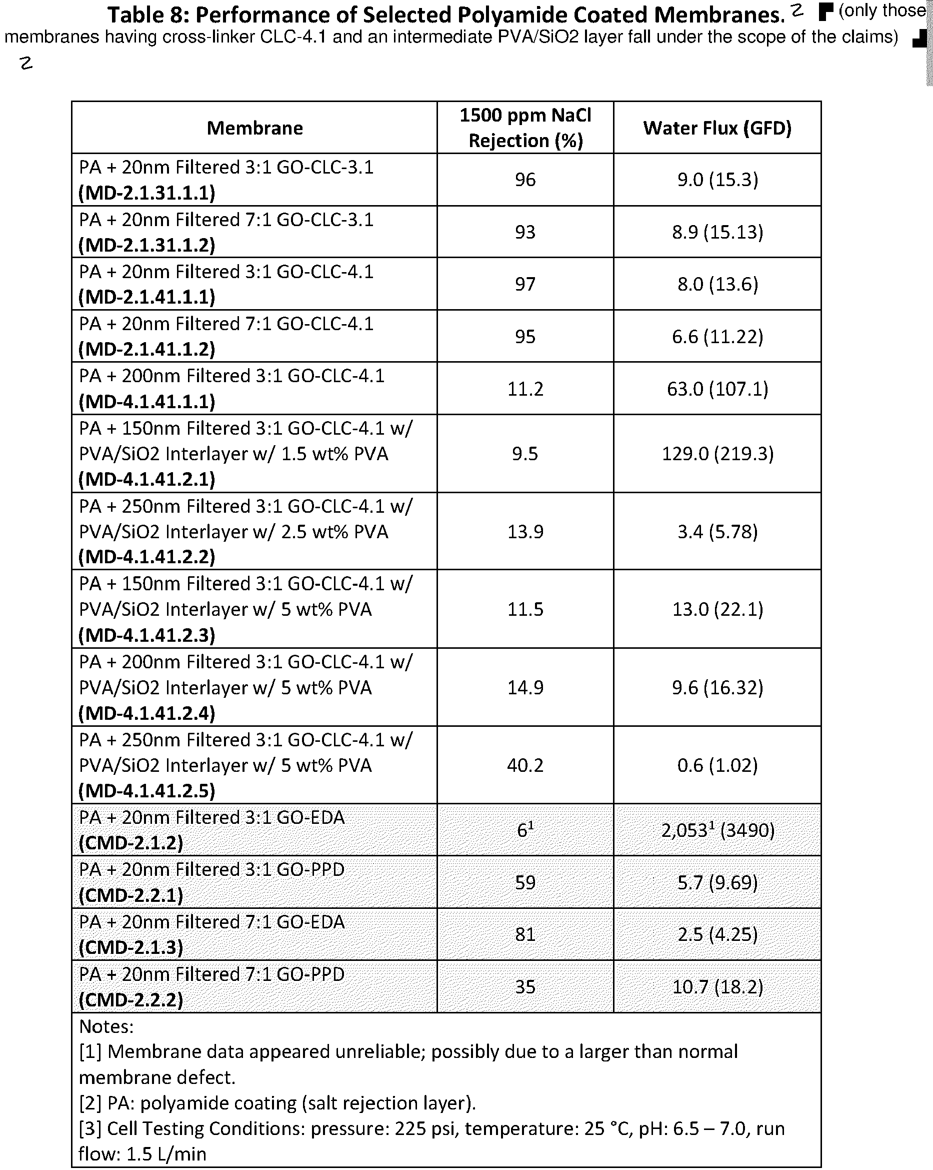

Flux is measured as (GFD) (galons/day/ft²) - these are shown in parenthesis in units of L/hr/m²

## Claims

1. A water permeable membrane comprising:
a porous support pretreated with dopamine;
an intermediate filtering layer comprising a silica composite, in physical communication with the porous support, wherein the silica composite is formed by reacting a mixture comprising silica nanoparticles and polyvinyl alcohol; and
a crosslinked graphene oxide composite layer in physical communication with said intermediate filtering layer, wherein the crosslinked graphene oxide composite layer is formed by reacting a mixture comprising a graphene oxide compound and a cross-linker, wherein the cross-linker comprises:

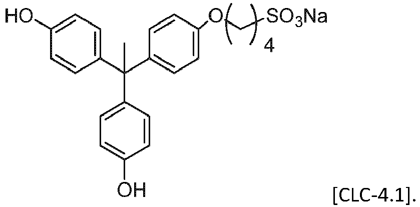

2. The membrane of claim 1, wherein the average size of the silica nanoparticles is from 5 nm to 15 nm.

3. The membrane of claim 1, or 2, wherein the porous support is a non-woven fabric.

4. The membrane of claim 1, 2, or 3, wherein the weight ratio of cross-linker to the graphene oxide compound is 0.25 to 15.

5. The membrane of claim 1, 2, 3 , or 4, wherein the graphene oxide compound is graphene oxide.

6. The membrane of claim 1, 2, 3, 4, or 5, further comprising a salt rejection layer which is effective to reduce the salt permeability of the membrane, wherein the salt rejection layer comprises a polyamide prepared by reacting meta-phenylenediamine and trimesoyl chloride; and wherein the salt rejection layer is disposed on top of the cross linked graphene oxide composite layer.

7. The membrane of claim 6, wherein the salt rejection layer is effective to reduce the permeability of NaCl through the membrane.

8. The membrane of claim 1, 2, 3, 4, 5, 6, or 7, wherein the membrane has a thickness of 50 nm to 500 nm.

9. A method of removing solute from an unprocessed solution comprising exposing the unprocessed solution to a membrane of claim 1, 2, 3, 4, 5, 6, 7, or 8.

10. The method of claim 9, wherein the unprocessed solution is passed through the membrane.

11. The method of claim 10, wherein the unprocessed solution is passed through the membrane by applying a pressure gradient across the membrane.

12. A method of making a water permeable membrane comprising: curing a coating mixture that has been applied to a substrate, wherein the curing is carried out at a temperature of 50 °C to 150 °C for 1 minute to 5 hours, wherein the coating mixture comprises an aqueous solution comprising an optionally substituted graphene oxide and a cross-linker that has been rested for 30 minutes to 12 hours to create a coating mixture; wherein the cross-linker comprises: 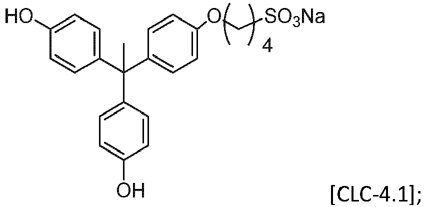 and wherein a crosslinked SiO₂ nanoparticle composite has been applied to the substrate before applying the coating mixture, wherein the crosslinked SiO₂ nanoparticle composite has been applied by a method comprising: (1) applying a single mixed aqueous solution of polyvinyl alcohol and silica nanoparticles to a substrate, (2) repeating step 1 as necessary to achieve the desired thickness or number of layers, and (3) curing the coated substrate at a temperature of 90 °C to 150 °C for 1 minute to 5 hours.

## Patentansprüche

1. Wasserdurchlässige Membran, umfassend:
ein mit Dopamin vorbehandelter poröser Träger;
eine Zwischenfilterschicht, umfassend einen Siliciumdioxidverbundstoff in physikalischer Kommunikation mit dem porösen Träger, wobei der Siliciumdioxidverbundstoff mittels Reagierens einer Mischung, umfassend Siliciumdioxidnanopartikel und Polyvinylalkohol, ausgebildet wird; und
eine vernetzte Graphenoxidverbundstoffschicht in physikalischer Kommunikation mit der Zwischenfilterschicht, wobei die vernetzte Graphenoxidverbundstoffschicht mittels Reagierens einer Mischung, umfassend eine Graphenoxidverbindung und einen Vernetzer, ausgebildet wird, wobei der Vernetzer Folgendes umfasst:

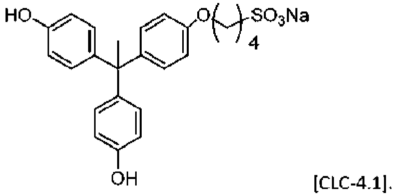

2. Membran nach Anspruch 1, wobei die Durchschnittsgröße der Siliciumdioxidnanopartikel 5 nm bis 15 nm beträgt.

3. Membran nach Anspruch 1 oder 2, wobei der poröse Träger ein Vliesstoff ist.

4. Membran nach Anspruch 1, 2 oder 3, wobei das Gewichtsverhältnis von Vernetzer zu der Graphenoxidverbindung 0,25 bis 15 beträgt.

5. Membran nach Anspruch 1, 2, 3 oder 4, wobei die Graphenoxidverbindung Graphenoxid ist.

6. Membran nach Anspruch 1, 2, 3, 4 oder 5, ferner umfassend eine Salzabweisungsschicht, die wirksam ist, um die Salzpermeabilität der Membran zu verringern, wobei die Salzabweisungsschicht ein Polyamid umfasst, das mittels Reagierens von meta-Phenylendiamin und Trimesoylchlorid erstellt wird; und wobei die Salzabweisungsschicht obenauf der Verbundstoffschicht aus vernetztem Graphenoxid angeordnet ist.

7. Membran nach Anspruch 6, wobei die Salzabweisungsschicht wirksam ist, um die Permeabilität von NaCl durch die Membran zu verringern.

8. Membran nach Anspruch 1, 2, 3, 4, 5, 6 oder 7, wobei die Membran eine Dicke von 50 nm bis 500 nm aufweist.

9. Verfahren zum Entfernen eines gelösten Stoffes aus einer unverarbeiteten Lösung, umfassend ein Aussetzen der unverarbeiteten Lösung einer Membran nach Anspruch 1, 2, 3, 4, 5, 6, 7 oder 8.

10. Verfahren nach Anspruch 9, wobei die unverarbeitete Lösung durch die Membran geleitet wird.

11. Verfahren nach Anspruch 10, wobei die unverarbeiteten Lösung durch die Membran mittels Aufbringens eines Druckgradienten über die Membran hinweg geleitet wird.

12. Verfahren zum Herstellen einer wasserdurchlässigen Membran, umfassend: Härten einer Beschichtungsmischung, die auf ein Substrat aufgebracht wurde, wobei das Härten bei einer Temperatur von 50 °C bis 150 °C 1 Minute bis 5 Stunden lang ausgeführt wird, wobei die Beschichtungsmischung eine wässrige Lösung umfasst, umfassend ein optional substituiertes Graphenoxid und einen Vernetzer, der 30 Minuten bis 12 Stunden lang ruhen gelassen wurde, um eine Beschichtungsmischung zu erzeugen; wobei der Vernetzer Folgendes umfasst: 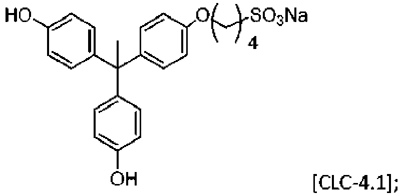 und wobei ein Verbundstoff aus vernetzten SiO₂-Nanopartikeln auf das Substrat aufgebracht wurde, bevor die Beschichtungsmischung aufgebracht wurde, wobei der Verbundstoff aus vernetzten SiO₂-Nanopartikeln mittels eines Verfahrens aufgebracht wurde, umfassend: (1) Aufbringen einer einzelnen gemischten wässrigen Lösung von Polyvinylalkohol und Siliciumdioxidnanopartikeln auf ein Substrat, (2) Wiederholen von Schritt 1 nach Bedarf, um die gewünschte Dicke oder Anzahl von Schichten zu erreichen und (3) Härten des beschichteten Substrats bei einer Temperatur von 90 °C bis 150 °C 1 Minute bis 5 Stunden lang.

## Revendications

1. Membrane perméable à l'eau comprenant :
un support poreux prétraité à la dopamine ;
une couche filtrante intermédiaire comprenant un composite de silice, en communication physique avec le support poreux, dans laquelle le composite de silice est formé en faisant réagir un mélange comportant des nanoparticules de silice et de l'alcool polyvinylique ; et
une couche composite d'oxyde de graphène réticulé en communication physique avec ladite couche filtrante intermédiaire, dans laquelle la couche composite d'oxyde de graphène réticulé est formée en faisant réagir un mélange comprenant un composé d'oxyde de graphène et un agent de réticulation, dans lequel l'agent de réticulation comprend :

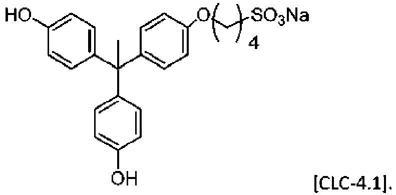

2. Membrane selon la revendication 1, dans laquelle la taille moyenne des nanoparticules de silice est de 5 nm à 15 nm.

3. Membrane selon la revendication 1 ou 2, dans laquelle le support poreux est un tissu non tissé.

4. Membrane selon la revendication 1, 2 ou 3, dans laquelle le rapport pondéral de l'agent de réticulation au composé d'oxyde de graphène est de 0,25 à 15.

5. Membrane selon la revendication 1, 2, 3 ou 4, dans laquelle le composé d'oxyde de graphène est l'oxyde de graphène.

6. Membrane selon la revendication 1, 2, 3, 4 ou 5, comprenant en outre une couche de rejet de sel qui est efficace pour réduire la perméabilité au sel de la membrane, dans laquelle la couche de rejet de sel comprend un polyamide préparé en faisant réagir de la méta-phénylènediamine et du chlorure de trimésoyle ; et dans laquelle la couche de rejet de sel est disposée au-dessus de la couche composite d'oxyde de graphène réticulé.

7. Membrane selon la revendication 6, dans laquelle la couche de rejet de sel est efficace pour réduire la perméabilité du NaCl à travers la membrane.

8. Membrane selon la revendication 1, 2, 3, 4, 5, 6 ou 7, dans laquelle la membrane a une épaisseur de 50 nm à 500 nm.

9. Procédé d'élimination de soluté d'une solution non traitée comprenant l'exposition de la solution non traitée à une membrane selon la revendication 1, 2, 3, 4, 5, 6, 7 ou 8.

10. Procédé selon la revendication 9, dans lequel la solution non traitée est passée à travers la membrane.

11. Procédé selon la revendication 10, dans lequel le passage de la solution non traitée à travers la membrane est réalisé par application d'un gradient de pression à travers la membrane.

12. Procédé de fabrication d'une membrane perméable à l'eau comprenant : le durcissement d'un mélange de revêtement qui a été appliqué sur un substrat, dans lequel le durcissement est réalisé à une température de 50 °C à 150 °C pendant 1 minute à 5 heures, dans lequel le mélange de revêtement comprend une solution aqueuse comprenant un oxyde de graphène éventuellement substitué et un agent de réticulation qui a été laissé au repos pendant 30 minutes à 12 heures pour créer un mélange de revêtement ; dans lequel l'agent de réticulation comprend : 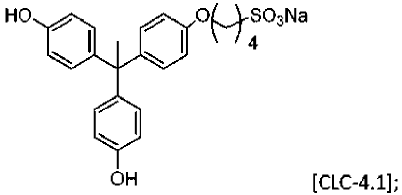 et dans lequel un composite de nanoparticules de SiO₂ réticulé a été appliqué sur le substrat avant d'appliquer le mélange de revêtement, dans lequel le composite de nanoparticules de SiO₂ réticulé a été appliqué par un procédé comprenant : (1) l'application d'une seule solution aqueuse mixte d'alcool polyvinylique et de nanoparticules de silice sur un substrat, (2) la répétition de l'étape 1 si nécessaire pour obtenir l'épaisseur ou le nombre de couches souhaité, et (3) le durcissement du substrat revêtu à une température de 90 °C à 150 °C pendant 1 minute à 5 heures.
